# EUROPEAN PATENT APPLICATION

(11) **EP 4 797 756 A1**
(43) Date of publication of application: **26.08.2026**
(21) Application number: 23955719.2
(22) Date of filing: 18.10.2023
(51) Int. Cl.: H04W 12/08

(54) **AUTHORIZATION METHOD AND APPARATUS IN SIDELINK COMMUNICATION SERVICE, DEVICE AND MEDIUM**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); GAN, Lu, Dongguan, Guangdong 523860 (CN); WANG, Yaxin, Dongguan, Guangdong 523860 (CN)
(74) Representative: RGTH
(86) International application number: PCT/CN2023/125287
(87) International publication number: WO 2025/081392

(57) **Abstract**

The present application relates to the field of sidelink communications, and discloses an authorization method and apparatus in sidelink communication service, a device and a medium. The method comprises: on the basis of first information and second information, authorizing a first UE and a second UE, wherein the first information is information used for authorizing the first UE, and the second information is information used for authorizing the second UE. The method provided by the present application can acquire the first information in advance, and can implement an authorization mechanism between the UEs by means of the first information and the second UE under the condition of no network coverage.

## Description

### TECHNICAL FIELD

This application relates to the field of sidelink communications, and in particular, to an authorization method and apparatus in a sidelink communication service, a device, and a medium.

### BACKGROUND

For an inter-terminal authorization mechanism, inter-terminal authorization requires assistance from a network side or an external application to obtain an authorization result, for example, by using configuration information for a specific device stored on a network side, and by querying the network side or the external application.

However, in an absence of network coverage, how to implement an inter-terminal authorization mechanism has not been solved.

### SUMMARY

Embodiments of this application provide an authorization method and apparatus in a sidelink communication service, a device, and a medium. The technical solutions are as follows.

According to an aspect of this application, an authorization method in a sidelink communication service is provided, where the method is executed by a first UE, and the method includes:
acquiring first information, where the first information is information used to authorize the first UE.

According to another aspect of this application, an authorization method in a sidelink communication service is provided, where the method is executed by a first network element, and the method includes:
receiving a first request from a first UE;
transmitting a second request to a second network element, where the second request is used to request authorization for the first UE;
receiving a second response message from the second network element, where the second response message carries first information, and the first information is information used to authorize the first UE; and
transmitting a first response message to the first UE, where the first response message carries the first information.

According to another aspect of this application, an authorization method in a sidelink communication service is provided, where the method is executed by a second network element, and the method includes:
receiving a second request transmitted by a first network element, where the second request is used to request authorization for a first UE; and
transmitting a second response message to the first network element, where the second response message carries first information, and the first information is information used to authorize the first UE.

According to another aspect of this application, an authorization method in a sidelink communication service is provided, where the method is executed by a first UE, and the method includes:
performing authorization between the first UE and a second UE based on first information and second information, where the first information is information used to authorize the first UE, and the second information is information used to authorize the second UE.

According to another aspect of this application, an authorization method in a sidelink communication service is provided, where the method is executed by a second UE, and the method includes:
performing authorization between a first UE and the second UE based on first information and second information, where the first information is information used to authorize the first UE, and the second information is information used to authorize the second UE.

According to another aspect of this application, an authorization method in a sidelink communication service is provided, where the method is executed by a first UE, and the method includes:
authorizing a second UE based on second information, where the second information is information used to authorize the second UE.

According to another aspect of this application, an authorization apparatus in a sidelink communication service is provided, where the apparatus includes:
an acquisition module, configured to acquire first information, where the first information is information used for authorization between a first UE and a second UE.

According to another aspect of this application, an authorization apparatus in a sidelink communication service is provided, where the apparatus includes:
a first receiving module, configured to receive a first request from a first UE;
a first transmitting module, configured to transmit a second request to a second network element, where the second request is used to request authorization for the first UE;
a second receiving module, configured to receive a second response message from the second network element, where the second response message carries first information, and the first information is information used to authorize the first UE; and
a second transmitting module, configured to transmit a first response message to the first UE, where the first response message carries the first information.

According to another aspect of this application, an authorization apparatus in a sidelink communication service is provided, where the apparatus includes:
a third receiving module, configured to receive a second request transmitted by a first network element, where the second request is used to request authorization for a first UE; and
a third transmitting module, configured to transmit a second response message to the first network element, where the second response message carries first information, and the first information is information used to authorize the first UE.

According to another aspect of this application, an authorization apparatus in a sidelink communication service is provided, where the apparatus includes:
a first authorization module, configured to perform authorization between a first UE and a second UE based on first information and second information, where the first information is information used to authorize the first UE, and the second information is information used to authorize the second UE.

According to another aspect of this application, an authorization apparatus in a sidelink communication service is provided, where the apparatus includes:
a second authorization module, configured to perform authorization between a first UE and a second UE based on first information and second information, where the first information is information used to authorize the first UE, and the second information is information used to authorize the second UE.

According to another aspect of this application, a computer-readable storage medium is provided, where the computer-readable storage medium stores a computer program, and the computer program is configured to be executed by a processor, to implement the authorization method in the sidelink communication service.

According to another aspect of this application, a chip is provided, where the chip includes a programmable logic circuit and/or a program instruction. When the chip runs, the authorization method in the sidelink communication service is implemented.

According to another aspect of this application, a computer program product or a computer program is provided, where the computer program product or the computer program includes a computer instruction, the computer instruction is stored in a computer-readable storage medium, and the processor reads the computer instruction from the computer-readable storage medium and executes the computer instruction, to implement the authorization method in the sidelink communication service.

The technical solutions provided in embodiments of this application include at least the following beneficial effects.

In the foregoing solutions, the first information is acquired in advance, so that an inter-UE authorization mechanism may be implemented by using the first information and the second UE in an absence of network coverage. Therefore, the first information used for authorization is acquired in advance in a case that there is network coverage, and an effect of an inter-UE authorization mechanism in a sidelink communication service scenario may still be implemented in an absence of network coverage by using the second UE and the first information acquired in advance, thereby ensuring information security in the sidelink communication service scenario.

### BRIEF DESCRIPTION OF DRAWINGS

To describe technical solutions in embodiments of this application more clearly, the following briefly describes the accompanying drawings required for the embodiments. Apparently, the accompanying drawings in the following description show merely some embodiments of this application, and a person skilled in the art may still derive other drawings from these accompanying drawings without creative efforts.
FIG. 1 is a schematic diagram of a communications system according to an example embodiment of this application.
FIG. 2 is a schematic diagram of sidelink communication according to an example embodiment of this application.
FIG. 3 is a schematic diagram of sidelink communication according to an example embodiment of this application.
FIG. 4 is a schematic diagram of sidelink communication according to an example embodiment of this application.
FIG. 5 is a schematic diagram of an SL discovery process according to an example embodiment of this application.
FIG. 6 is a schematic diagram of an SL discovery process according to an example embodiment of this application.
FIG. 7 is a schematic diagram of an SL positioning procedure according to an example embodiment of this application.
FIG. 8 is a flowchart of an authorization method in a sidelink communication service according to an example embodiment of this application.
FIG. 9 is a flowchart of an authorization method in a sidelink communication service according to an example embodiment of this application.
FIG. 10 is a flowchart of an authorization method in a sidelink communication service according to an example embodiment of this application.
FIG. 11 is a flowchart of an authorization method in a sidelink communication service according to an example embodiment of this application.
FIG. 12 is a flowchart of an authorization method in a sidelink communication service according to an example embodiment of this application.
FIG. 13 is a flowchart of an authorization method in a sidelink communication service according to an example embodiment of this application.
FIG. 14 is a flowchart of an authorization method in a sidelink communication service according to an example embodiment of this application.
FIG. 15 is a flowchart of an authorization method in a sidelink communication service according to an example embodiment of this application.
FIG. 16 is a flowchart of an authorization method in a sidelink communication service according to an example embodiment of this application.
FIG. 17 is a flowchart of an authorization method in a sidelink communication service according to an example embodiment of this application.
FIG. 18 is a flowchart of an authorization method in a sidelink communication service according to an example embodiment of this application.
FIG. 19 is a flowchart of an authorization method in a sidelink communication service according to an example embodiment of this application.
FIG. 20 is a flowchart of an authorization method in a sidelink communication service according to an example embodiment of this application.
FIG. 21 is a flowchart of an authorization method in a sidelink communication service according to an example embodiment of this application.
FIG. 22 is a flowchart of an authorization method in a sidelink communication service according to an example embodiment of this application.
FIG. 23 is a flowchart of an authorization method in a sidelink communication service according to an example embodiment of this application.
FIG. 24 is a flowchart of an authorization method in a sidelink communication service according to an example embodiment of this application.
FIG. 25 is a flowchart of an authorization method in a sidelink communication service according to an example embodiment of this application.
FIG. 26 is a structural block diagram of an authorization method in a sidelink communication service according to an example embodiment of this application.
FIG. 27 is a structural block diagram of an authorization method in a sidelink communication service according to an example embodiment of this application.
FIG. 28 is a structural block diagram of an authorization apparatus in a sidelink communication service according to an example embodiment of this application.
FIG. 29 is a structural block diagram of an authorization apparatus in a sidelink communication service according to an example embodiment of this application.
FIG. 30 is a structural block diagram of an authorization apparatus in a sidelink communication service according to an example embodiment of this application.
FIG. 31 is a structural block diagram of an authorization apparatus in a sidelink communication service according to an example embodiment of this application.
FIG. 32 is a structural block diagram of an authorization apparatus in a sidelink communication service according to an example embodiment of this application.
FIG. 33 is a schematic structural diagram of a wireless communications device according to an example embodiment of this application.

### DESCRIPTION OF EMBODIMENTS

To make the objectives, technical solutions, and advantages of this application clearer, the following further describes the implementations of this application in detail with reference to the accompanying drawings. Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, they are only examples of apparatuses and methods that are described in the appended claims in detail and that are consistent with some aspects of this application.

Terms used in this application are merely intended to describe specific embodiments, but are not intended to limit this application. The singular forms of "a/an", "said", and "the" used in this application and the appended claims are also intended to include plural forms, unless the context clearly implies otherwise. It should also be understood that the term "and/or" as used herein refers to and includes any or all possible combinations of one or more of associated listed items.

It should be understood that although the terms such as first, second, and third may be used in this application to describe various types of information, such information is not limited to these terms. These terms are merely used to distinguish information of a same type from each other. For example, without departing from the scope of this application, first information may also be referred to as second information. Similarly, second information may also be referred to as first information. Depending on the context, the term "if" as used herein may be interpreted as "in a case that", "when", or "in response to determining that".

Generally, unless otherwise expressly defined herein, all terms used in the claims are interpreted in accordance with their ordinary meaning in the art. Unless otherwise expressly stated, all references to "an element, apparatus, component, device, step, and the like." shall be openly interpreted as referring to at least one instance of a component, apparatus, component, device, step, and the like. Unless expressly stated, the steps of any method disclosed herein are not necessarily performed in the exact order disclosed.

It should be understood that, in embodiments of this application, sequence numbers of the foregoing processes do not mean execution sequences. The execution sequences of the processes should be determined based on functions and internal logic of the processes, and should not be construed as any limitation on the implementation processes of the embodiments of this application.

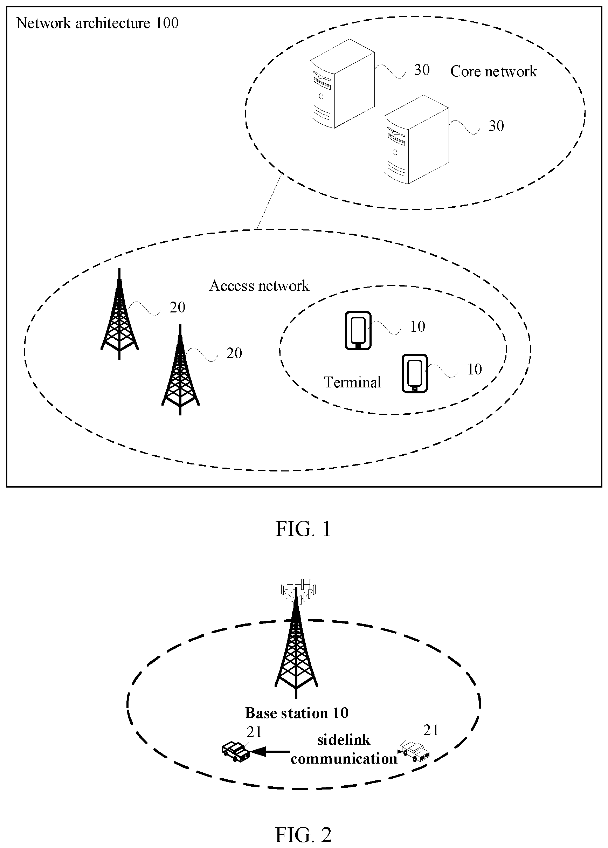

FIG. 1 is a schematic diagram of a network architecture according to an embodiment of this application. The network architecture 100 may include a terminal 10, an access network device 20, and a core network device 30.

The terminal 10 may refer to user equipment (User Equipment, UE), an access terminal, a subscriber unit, a subscriber station, a mobile station, a mobile console, a remote station, a remote terminal, a mobile device, a wireless communications device, a user agent, or a user apparatus. Optionally, the terminal 10 may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or any other processing device connected to a wireless modem, a vehicle-mounted device, a wearable device, a terminal in a 5th mobile communications system (5th Generation System, 5GS) or a terminal in a future evolved public land mobile network (Public Land Mobile Network, PLMN), or the like, which is not limited in embodiments of this application. For ease of description, the devices mentioned above are collectively referred to as a terminal. There are generally a plurality of terminals 10. One or more terminals 10 may be distributed in a cell managed by each access network device 20.

The access network device 20 is a device that is deployed in an access network and that is configured to provide the terminal 10 with a wireless communication function. The access network device 20 may include various forms of macro base stations, micro base stations, relay nodes, access points, and the like. In systems using different radio access technologies, a device having a function of an access network device may have a different name. For example, in a 5G NR system, the device is referred to as gNodeB or gNB (next Generation Node B, next generation Node B (or a new generation access network node)). As communications technologies evolve, the name "access network device" may change. For ease of description, in embodiments of this application, apparatuses mentioned above that provide the terminal 10 with a wireless communication function are collectively referred to as an access network device. Optionally, a communication relationship may be established between the terminal 10 and the core network device 30 through the access network device 20. For example, in a long term evolution (Long Term Evolution, LTE) system, the access network device 20 may be one or more evolved eNodeBs in an evolved universal terrestrial radio access network (Evolved Universal Terrestrial Radio Access Network, EUTRAN) or EUTRAN. In the 5G NR system, the access network device 20 may be one or more gNBs in a radio access network (Radio Access Network, RAN) or RAN. In embodiments of this application, unless otherwise specified, the network device refers to the access network device 20, such as a base station.

The core network device 30 is a device deployed in a core network. Main functions of the core network device 30 include providing user connectivity, managing users, and bearing services. It also serves as a bearer network to provide an interface to external networks. For example, in the 5G NR system, a core network device includes an access and mobility management function (Access and Mobility Management Function, AMF) network element, an authentication server function (Authentication Server Function, AUSF) network element, a user plane function (User Plane Function, UPF) network element, a session management function (Session Management Function, SMF) network element, a location management function (Location Management Function, LMF) network element, a policy control function (Policy Control Function, PCF) network element, a unified data management (Unified Data Management, UDM) network element, or the like.

In an example, the access network device 20 and the core network device 30 communicate with each other by using an interface technology, such as an NG interface in the 5G NR system. The access network device 20 and the terminal 10 communicate with each other by using an air interface technology, for example, a Uu (cellular network communications interface) interface.

An access network device is an access device that is accessed by a terminal to the network architecture in a wireless manner, and is mainly responsible for radio resource management on an air interface side, quality of service (Quality of Service, QoS) management, data compression and encryption, and the like. The access network device is, for example, a base station NodeB, an evolved base station eNodeB, a base station in a 5G mobile communications system or a new radio (New Radio, NR) communications system, or a base station in a future mobile communications system.

A core network device includes an NSSF (Network Slice Selection Function, network slice selection function), an AUSF, a UDM, an AMF, an SMF, a PCF, and a UPF.

A UE implements an access stratum connection, exchanges access stratum messages, and performs wireless data transmission with an (R)AN (Access Network, access network) by using a Uu interface, and the UE implements a non-access stratum (None Access Stratum, NAS) connection and exchanges NAS messages with an AMF by using an N1 interface. The AMF is a mobility management function in a core network, and the SMF is a session management function in the core network. In addition to performing mobility management on the UE, the AMF is also responsible for forwarding a message related to session management between the UE and the SMF. The PCF is a policy management function in the core network, and is responsible for formulating policies related to mobility management, session management, charging, and the like of the UE. The PCF performs data transmission with an external application function (Application Function, AF) by using an N5 interface. The UPF is a user plane function in the core network, and performs data transmission with an external data network (Data Network, DN) by using an N6 interface and performs data transmission with the AN by using an N3 interface.

In embodiments of this application, the term "5G NR system" may also be referred to as a 5G system or an NR system, and those skilled in the art may understand its meaning. The technical solutions described in embodiments of this application may be applicable to an LTE system, a 5G NR system, a subsequent evolved system of the 5G NR system, or another communications systems such as a narrow band Internet of things (Narrow Band Internet of Things, NB-IoT) system, which is not limited in embodiments of this application.

Before introduction of the technical solutions of this application, some background technical knowledge related to this application is first described. The following related technologies, as optional solutions, may be randomly combined with the technical solutions in embodiments of this application, all of which fall within the protection scope of embodiments of this application. Embodiments of this application include at least a part of the following content.

**Vehicle to everything (Vehicle to everything, V2X)** is a key technology of an intelligent transport system in the future, and mainly studies a vehicle data transmission solution based on a 3GPP communication protocol. V2X communication includes vehicle to vehicle (Vehicle to Vehicle, V2V) communication, vehicle to infrastructure (Vehicle to Infrastructure, V2I) communication, and vehicle to people (Vehicle to People, V2P) communication. Application of V2X may help to improve driving safety, reduce congestion and vehicle energy consumption, improve traffic efficiency, and the like.

### SL (Sidelink, sidelink) transmission technology

Different from transmission in a conventional cellular system that communication data is received or transmitted by using an access network device, SL transmission means that communication data is directly transmitted between terminals by using a sidelink.

For SL transmission, 3GPP (3rd Generation Partnership Project, 3rd generation partnership project) defines two transmission modes: Mode A and mode B.

Mode A: A transmission resource of an SL UE is allocated by an access network device. The SL UE transmits communication data on a sidelink based on the transmission resource allocated by the access network device. The access network device can allocate a transmission resource to the SL UE for single transmission, and also can allocate a transmission resource to the SL UE for semi-static transmission.

Mode B: The SL UE selects one or more transmission resources from a resource pool for transmission of communication data. The SL UE may select a transmission resource from the resource pool in a listening manner, or select a transmission resource from the resource pool in a random manner. When SL transmission is performed on unlicensed spectrum, the access network device may pre-configure a plurality of resource pools (an SL PRS resource pool, an SL-U communication resource pool, and the like) for the UE. When executing a specific service, the UE may select a resource from a corresponding resource pool to execute an LBT (Listen Before Talk, Listen Before Talk) process. If LBT succeeds, the UE may perform sidelink transmission on unlicensed spectrum by occupying this part of resources. When transmitting sidelink data on this part of resources, the UE further transmits SCI, and the SCI indicates a resource occupied by current sidelink transmission of the UE. In addition, the SCI may be further used to indicate a resource reserved by the UE. For example, the UE occupies a part of resources for transmitting an SL PRS in the SL PRS resource pool by using LBT. In this case, the UE transmits the SL PRS and SCI-P on the part of resources. The SCI-P indicates a resource occupied by a current SL PRS and a resource reserved for a subsequent SL PRS.

SL communication may be divided, depending on network coverage statuses of a terminal that performs communication, into sidelink communication within network coverage, sidelink communication with partial network coverage, sidelink communication outside network coverage, as shown in FIG. 2, FIG. 3, and FIG. 4, respectively.

As shown in FIG. 2, in the sidelink communication within network coverage, all terminals 21 that perform sidelink communication are within coverage of one base station 10. Thus, all the terminals 21 may perform sidelink communication based on a same sidelink configuration by receiving configuration signalling from the base station 10.

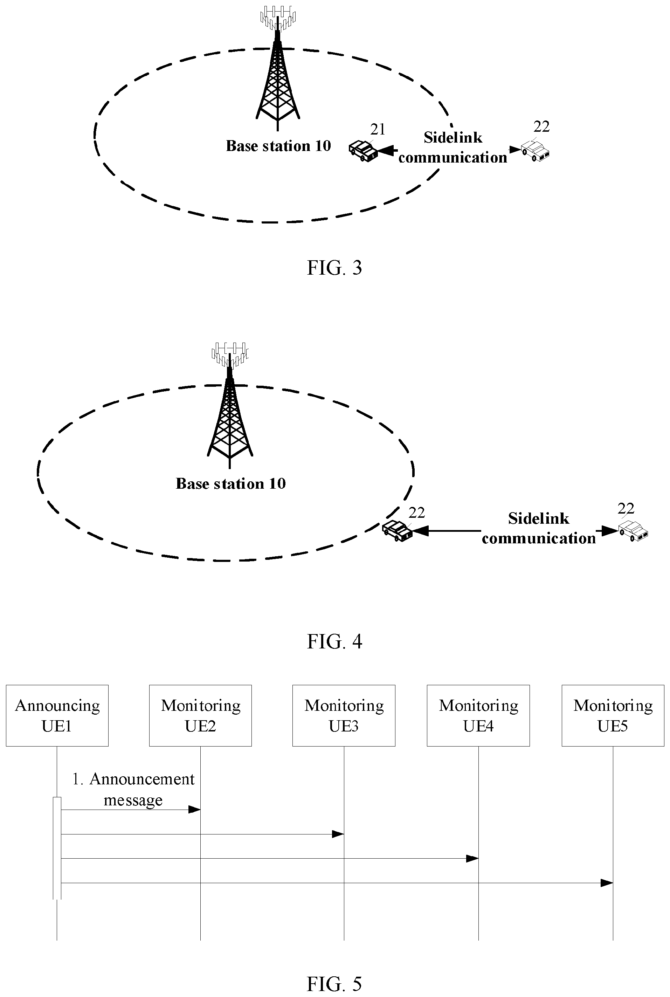

As shown in FIG. 3, in a case of the sidelink communication with partial network coverage, some terminals 21 that perform sidelink communication are located within coverage of a base station, the terminals 21 can receive configuration signalling from the base station 10, and perform sidelink communication based on a configuration of the base station 10. However, a terminal 22 located outside network coverage cannot receive configuration signalling from the base station 10. In this case, the terminal 22 outside the network coverage determines, based on pre-configuration (pre-configuration) information and information carried in a physical sidelink broadcast channel (Physical Sidelink Broadcast Channel, PSBCH) transmitted by the terminals 21 located within the network coverage, a sidelink configuration for sidelink communication.

As shown in FIG. 4, for the sidelink communication outside network coverage, all terminals 22 that perform sidelink communication are located outside network coverage, and all terminals 22 determine a sidelink configuration based on pre-configuration information for sidelink communication.

### SL Discovery (Discovery)

### Mode A discovery (Model A Discovery) ("I am here")

As shown in FIG. 5, the model defines two roles for a UE involved in discovery: 1. announcing UE (Announcing UE): which is used to announce some information by using an announcement message, where the information may be used by a neighboring UE having discovery permission; and 2. monitoring UE (Monitoring UE): a UE that monitors some information of interest near the announcing UE. In this model, an announcing UE1 broadcasts announcement messages at a predefined discovery interval, and a monitoring UE interested in the announcement messages reads and processes the discovery messages. Since the announcing UE broadcasts information about itself, the model is equivalent to "I am here".

Step 1: The Announcing UE (UE-1) transmits a ranging/SL positioning announcement message.

The ranging/SL positioning announcement message includes a type of a discovery message, a security protection element, RSPP (Reference Signal Receiving Power, reference signal received power) metadata information, and a user information ID of the announcing UE.

A destination layer-2 ID (Destination Layer-2 ID) for transmitting the ranging/SL location announcement message is configured.

A source layer-2 ID (Source Layer-2 ID) for transmitting the ranging/SL location announcement message is allocated by the announcing UE. The announcing UE transmits the announcement message only when the announcing UE is authorized as a corresponding UE role in the RSPP metadata information.

For an announcing UE that can obtain a location of an anchor UE (Located UE), the ranging/SL positioning announcement message further includes a serving PLMN of the announcing UE.

A user information ID of the announcing UE is an application layer ID of the announcing UE.

The monitoring UE determines a destination layer-2 ID for signalling reception based on the foregoing configuration.

The monitoring UE selects the announcing UE based on the information received in step 1.

In some embodiments, the RSPP metadata information (for example, the role of the announcing UE) is included as metadata in the announcement message. In some embodiments, the role of the announcing UE includes an anchor UE, a target UE (Target UE), an SL positioning server UE (SL Positioning Server UE), and an anchor UE capable of obtaining its own location.

In some embodiments, the anchor UE capable of obtaining its own location is an anchor UE whose location is known or an anchor UE capable of obtaining its own location by using Uu, which may also be referred to as an SL reference UE (SL Reference UE).

### Mode B discovery (Model A Discovery) ("Who is there"/"Are you there")

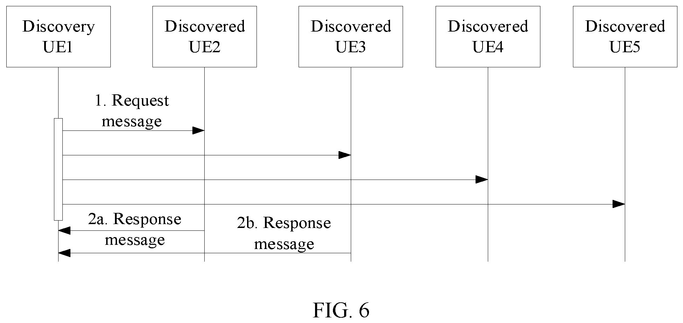

As shown in FIG. 6, the model defines two roles for a UE involved in discovery: 1. discovery UE: the discovery UE transmits a request containing some information about what it is interested in discovery; and 2. discovered UE: The UE that receives the request may respond to some information related to the request of the discovery UE. Because the discovery UE transmits information about another UE that expects to receive a response. The information can be a ProSe application identifier corresponding to a group. The members in the group may respond. Therefore, the model is equivalent to "Who is there/Are you there".

Step 1: The discovery UE (UE-1) transmits a ranging/SL positioning request. The ranging/SL positioning request includes a type of a discovery message, a security protection element, an optional user information ID of the discovery UE, target information, a user information ID of the discovery UE, and optional RSPP metadata information.

A destination layer-2 ID for transmitting the ranging/SL positioning request is configured.

A source layer-2 ID for transmitting the ranging/SL positioning request is allocated by the discovery UE.

The discovered UE transmits a response message only when the discovered UE is authorized as a corresponding UE role in the request.

When the role of the discovered UE is Located UE, the ranging/SL positioning response message further includes a serving PLMN of the discovered UE.

The user information ID of the discovery UE is an application layer ID of the discovery UE.

A user information ID of the discovered UE is used to identify a specific UE that the discovery UE expects to discover, and the specific UE is identified by an application layer ID of the discovered UE.

The discovered UE determines a destination layer-2 ID for signalling reception based on the foregoing configuration.

In some embodiments, the RSPP metadata information (for example, a specific UE role to be discovered) is included in the request as metadata. In some embodiments, the specific UE role to be discovered include an anchor UE, a target UE, an SL positioning server UE, and a Located UE.

The discovered UE that matches the ranging/SL positioning request (for example, the RSPP metadata information) responds to the discovery UE by using a ranging/SL positioning response message. The ranging/SL positioning response message includes a type of a discovery message, a security protection element, RSPP metadata information, and a user information ID of the discovered UE.

Step 2a. A discovered UE1 responds to the discovery UE by using the ranging/SL positioning response message.

Step 2b. A discovered UE2 responds to the discovery UE by using the ranging/SL positioning response message.

A source layer-2 ID for transmitting the ranging/SL positioning response message is configured.

A destination layer-2 ID is set to the source layer-2 ID of the received ranging/SL positioning request.

The user information ID of the discovered UE is an application layer ID of the discovered UE.

In some embodiments, the RSPP metadata information (for example, the role of the discovered UE) is included as metadata in the response message. In some embodiments, the role of the discovered UE includes an anchor UE, a target UE, an SL positioning server UE, and an anchor UE capable of obtaining its own location.

### SL positioning

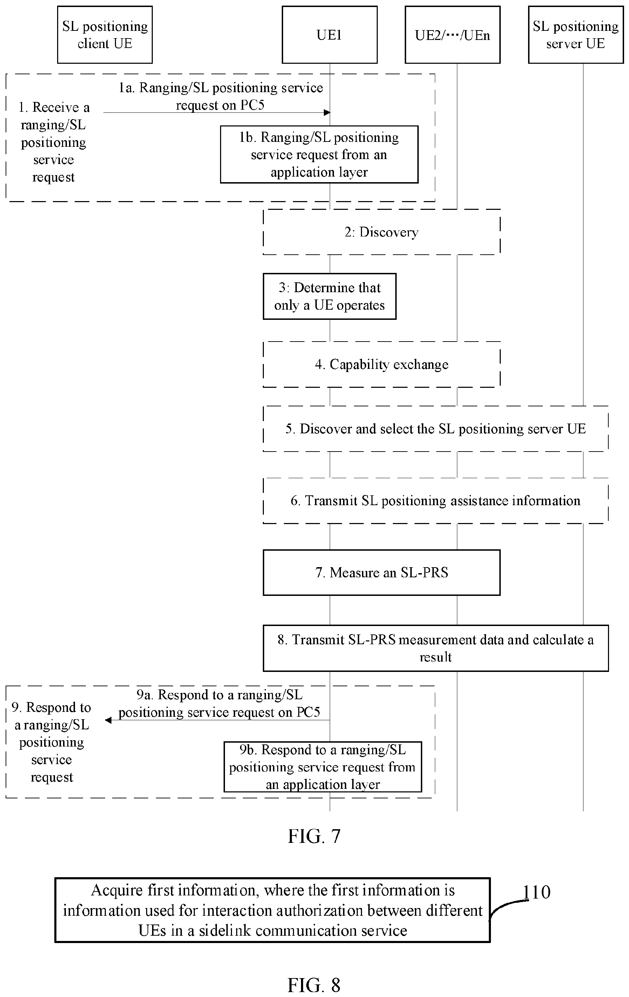

As shown in FIG. 7, UEs involved in an SL positioning process include an SL positioning client UE, a UE1, UE2/.../UEn, and an SL positioning server UE. The UE1 is also referred to as a target UE, the UE2/.../UEn is also referred to as an anchor UE, and the SL positioning server UE is also referred to as a server UE.

The related steps of the SL positioning process are described as follows.

**Step 1:** The UE1 receives a ranging/SL positioning service request.

In some embodiments, step 1 may be implemented as step 1a or step 1b.

**Step 1a:** The SL positioning client UE transmits a ranging/SL positioning service request from a PC5 (direct communications interface) to the UE1.

In some embodiments, the SL positioning client UE is positioned by using the PC5 in a process of performing ranging/SL positioning service exposure by using the PC5. That is, the SL positioning client transmits the ranging/SL positioning service request to the UE1 by using the PC5 interface.

In some embodiments, for absolute positioning, the ranging/SL positioning service request includes user information of the SL positioning client UE, user information of the target UE, and required positioning QoS.

In some embodiments, for a relative location or ranging information, the ranging/SL positioning service request includes user information of the SL positioning client UE, user information of the UE1, user information of the UE2/.../UEn, and ranging/SL positioning QoS information.

**Step 1b:** The UE1 receives the ranging/SL positioning service request from an application layer.

In some embodiments, the UE1 receives the ranging/SL positioning service request from the application layer.

In some embodiments, the ranging/SL positioning service request includes a result type and required QoS. The result type includes absolute position, relative position, or ranging information.

**Step 2:** The UE1 discovers the UE2/.../UEn.

In some embodiments, the UE2/.../UEn serves as an anchor UE. For example, the UE2/.../UEn is configured to transmit an SL-PRS (Positioning Reference Signal, positioning reference signal) to the UE1, and the UE1 performs SL-PRS measurement; or the UE1 is configured to transmit an SL-PRS to the UE2/.../UEn, and UE2/.../UEn each performs SL-PRS measurement.

**Step 3:** The UE1 determines UE operation only.

In some embodiments, if none of UEs in the UE1/.../UEn are not served by the NG-RAN, or a serving network does not support ranging/SL positioning, it is determined to apply UE operation only. In some embodiments, if the UE1/.../UEn is in an OOC scenario, UE operation only is determined.

**Step 4:** The UE1 and the UE2/.../UEn perform capability exchange.

In some embodiments, step 4 may be performed during step 5 and step 6 in coordination with the SL positioning server UE.

**Step 5:** The UE1 discovers and selects the SL positioning server UE.

In some embodiments, in a case that the UE1 does not support a function of the SL positioning server UE, the UE1 discovers and selects the SL positioning server UE. The SL positioning server UE may be a UE in the UE2/.../UEn, or may be another separate UE.

In some embodiments, in a case that the SL positioning server UE is the UE in the UE2/.../UEn or the another separate UE, the UE1 discovers and selects the SL positioning server UE, and requests the SL positioning server UE to participate in ranging/SL positioning.

**Step 6:** SL positioning assistance information is transmitted.

In some embodiments, the SL positioning assistance information is transmitted between the UE1, UE2/.../UEn, and the SL positioning server UE.

**Step 7:** An SL-PRS is measured.

In some embodiments, the SL-PRS is measured between the UE1 and the UE2/.../UEn.

In some embodiments, the SL-PRS is measured between UE2/.../UEn.

**Step 8:** SL-PRS measurement data is transmitted and a ranging/SL positioning result is calculated.

In some embodiments, at least one of the UE1 and/or UE2/.../UEn transmits the SL-PRS measurement data to the SL positioning server UE. The SL positioning server UE calculates the ranging/SL positioning result, and transmits the ranging/SL positioning result to the UE1. Based on the result type received in step 1, the SL positioning server UE calculates the absolute position, the relative position, or the ranging information.

In some embodiments, in a case that the UE1 supports the function of the SL positioning server UE, the UE2/.../UEn transmits the SL-PRS measurement data to the UE1, and the UE1 calculates the ranging/SL positioning result. Based on the result type received in step 1, the UE1 calculates the absolute position, the relative position, or the ranging information.

In some embodiments, the UE1 transmits the SL-PRS to the UE2/.../UEn, and the UE2/.../UEn measures the SL-PRS. The UE2/.../UEn transmits respective SL-PRS measurement data to the SL positioning server UE. The SL positioning server UE locates the UE2/.../UEn based on the SL-PRS measurement data, and calculates the absolute position, the relative position, or the ranging information of the UE1.

**Step 9:** The UE1 responds to the ranging/SL positioning service request.

**Step 9a:** The UE1 responds to the ranging/SL positioning service request transmitted by the SL positioning client UE from the PC5.

**Step 9b:** The UE1 responds to the ranging/SL positioning service request from the application layer.

In this application, an inter-terminal authorization in an absence of network coverage is designed, and the authorization is performed based on information provided by a network device. The following describes a method for acquiring, by a terminal, information provided by a network device and performing mutual authorization between terminals based on the information.

### For authorization between a UE and a network

FIG. 8 is a flowchart of an authorization method in a sidelink communication service according to an example embodiment of this application. The method is performed by a first UE, and the method includes at least one of the following steps.

**Step 110:** Acquire first information, where the first information is information used to authorize the first UE.

In some embodiments, the first information is information used by another UE to authorize the first UE.

In some embodiments, the first information is information used to authorize the first UE when authorization is performed between different UEs.

In some embodiments, the first information is information used by another UE in the sidelink communication service to authorize the first UE.

In some embodiments, the first information is information used to authorize the first UE when authorization is performed between different UEs in the sidelink communication service.

In some embodiments, the first information is information used by another UE to authorize the first UE in an absence of network coverage.

In some embodiments, the first information is information used to authorize the first UE when authorization is performed between different UEs in an absence of network coverage.

In some embodiments, the first information is information used by another UE to authorize the first UE in a case that there is network coverage.

In some embodiments, the first information is information used to authorize the first UE when authorization is performed between different UEs in a case that there is network coverage.

The first UE requests acquisition of the first information. For example, the first information carries at least one of the following content.

Policy information (policy information) is used for indicating an authorization policy of the first UE.

The policy information includes at least one of: whether the UE is authorized, a range in which the UE is authorized, public land mobile networks (Public Land Mobile Network, PLMN) authorized by the UE, or a granularity in which the UE is authorized. For example, a UEa has been authorized by a network, and a range of authorization is that the UE can be used for a positioning service in the region; or a UEb is not authorized by the UEa.

Service information (service information) is used for indicating an authorized service type of the first UE.

In some embodiments, the service type involved in service information includes at least one of the following:
sensing service;
sidelink sensing;
positioning;
sidelink positioning;
sensing service exposure;
sidelink sensing service exposure;
positioning service exposure;
sidelink positioning service exposure;
UE-to-UE U2U relay (UE-to-UE relay);
UE-to-network U2N relay (UE-to-Network relay); or
multipath relay.

The sensing service is a service for implementing environment sensing such as target positioning, action recognition, and imaging by detecting a parameter of a physical environment by using a radio wave. In some embodiments, sensing may be referred to as sensing and communication, or may be referred to as communication integrated with sensing.

The sidelink sensing is a sensing service performed by using a sidelink.

The positioning is a service for determining a relative position or an absolute position and a speed of a target by using a radio wave.

The sidelink positioning is a positioning service performed by using a sidelink.

The sensing service exposure is a service that discloses a sensing result to a service requester or a specific target.

The sidelink sensing service includes a service that discloses a sidelink sensing result to a service requester or a specific target.

The positioning service exposure is a service that discloses a positioning result to a service requester or a specific target.

The sidelink positioning service exposure is a service that discloses a sidelink positioning result to a service requester or a specific target.

The UE-to-UE U2U relay is a communication service that allows one terminal to connect to another terminal by means of a relay.

The UE-to-network U2N relay is a communication service that allows a terminal to connect to a network by means of a relay.

The multipath relay is a service that establishes a plurality of transmission paths with a network or a terminal by means of a plurality of relays.

UE role information is used for indicating a role of the first UE in the sidelink communication service.

In some embodiments, the role information of a UE includes at least one of the following:
a sensing UE (Sensing UE);
a target UE;
an assistance UE (Assistance UE);
a reference UE (Reference UE);
a transmitter UE (Transmitter UE) of a sensing signal;
a receiver UE (Receiver UE) of a sensing signal;
an announcing UE;
a monitoring UE;
an anchor UE;
a server UE (Server UE);
a client UE (Client UE); or
a relay UE (Relay UE).

An effective time is used for indicating an effective time of the first information and/or an authorized effective time.

In some embodiments, the effective time may be at least one of a start time, duration, or an end time.

For example, the effective time includes the start time and the end time, for example, the start time is 2023-10-11 15:00:00, and the end time is 2023-10-11 15:30:00. Alternatively, the effective time includes the start time and the duration, for example, the start time is 2023-10-11 15:00:00, and the duration is 30 minutes. Alternatively, the effective time includes the end time, for example, the end time is 2023-10-11 15:30:00. Alternatively, the effective time includes the start time, the duration, and the end time, for example, the start time is 2023-10-11 15:00:00, the duration is 30 minutes, and the end time is 2023-10-11 15:30:00. It should be noted that the effective time may be represented by using the foregoing time format, or may be represented by using another time format, such as ISO 8601, RFC 3339, or a timestamp.

In some embodiments, the first information is configured by a network device, that is, the first information is information configured by the network device for the first UE.

In some embodiments, the first information is a first token Token.

In some embodiments, the first token includes at least one of content information or signature, and the content information includes at least one of policy information, service information, UE role information, or effective time.

In some embodiments, the first information is obtained by performing encryption or signature by using a private key.

In an optional embodiment, a first message of the first token is obtained by performing, by a first token generator, signature on a first hash value by using a private key. The first hash value is obtained by performing hash (Hash) on content information. After acquiring the first token, the first UE may verify the first message by using a public key to obtain the first hash value. Then, a hash is performed on content information in the obtained first token to obtain a second hash value, and the first UE compares the first hash value with the second hash value. If the first hash value is consistent with the second hash value, it indicates that the first token has not been tampered with during transmission and is a correct token. If the first hash value is inconsistent with the second hash value, it indicates that information of the first token is lost or tampered with during transmission.

In another possible implementation scenario, signature of the first token is obtained after the first token generator performs signature on content information according to a signature algorithm. where the signature algorithm may be a JSON Web signature (JSON Web Signatures, JWS) algorithm, or a digital signature algorithm (Digital Signature Algorithm, DSA), or an elliptic curve digital signature algorithm (Elliptic Curve Digital Signature Algorithm, ECDSA), and the algorithm is carried in the first token. The first token generator signs the first token by using the private key. After acquiring the first token, the first UE verifies the first token by using a public key to obtain first content information, and then compares the content information with content information in the first token. If the first content information is consistent with the content information in the first token, it indicates that the first token has not been tampered with during transmission and is a correct token. If the first content information is inconsistent with the content information in the first token, it indicates that information of the first token is lost or tampered with during transmission.

In another possible implementation scenario, the first token carries only content information that is encrypted by using the private key. The first token obtained by the first UE is encrypted by using a private key, and the first UE may decrypt the first token by using a public key to obtain content information.

In some embodiments, the token meets a JWT (JSON Web Token) standard, including a head (Header), payload (Payload), and signature (Signature). The header includes at least one of a token type and a used signature algorithm. The payload includes transmitted information, such as an issuer, an expiration time, an effective time, and an audience. The payload may also be referred to as a declaration, or may be referred to as valid payload. The signature is for the header and the payload, the signature part is generated by performing signature by using the private key and according to a signature algorithm carried in the header, and the signature is used to prevent data from being tampered with.

For example, after generating the header and content of the payload, the first token generator signs the header and the payload by using the private key and according to the signature algorithm of the header to obtain content of the signature part, and fills the content of the signature part into the signature to complete generation of the first token. After receiving the first token, the first UE verifies the first token by using the public key according to the signature algorithm of the header, to obtain first content information. If the first content information is consistent with the header and payload in the first token, it indicates that the first token has not been tampered with during transmission.

In some embodiments, the public key corresponding to the private key is pre-configured, or the public key corresponding to the private key is carried in a first response message, or the public key corresponding to the private key is carried in the first information.

In conclusion, according to the method provided in embodiments of this application, the first information is acquired in advance, so that an inter-UE authorization mechanism may be implemented by using the first information and a second UE in an absence of network coverage. Therefore, the first information used for authorization is acquired in advance in a case that there is network coverage, and an effect of an inter-UE authorization mechanism in a sidelink communication service scenario may still be implemented in an absence of network coverage by using the second UE and the first information acquired in advance, thereby ensuring information security in the sidelink communication service scenario.

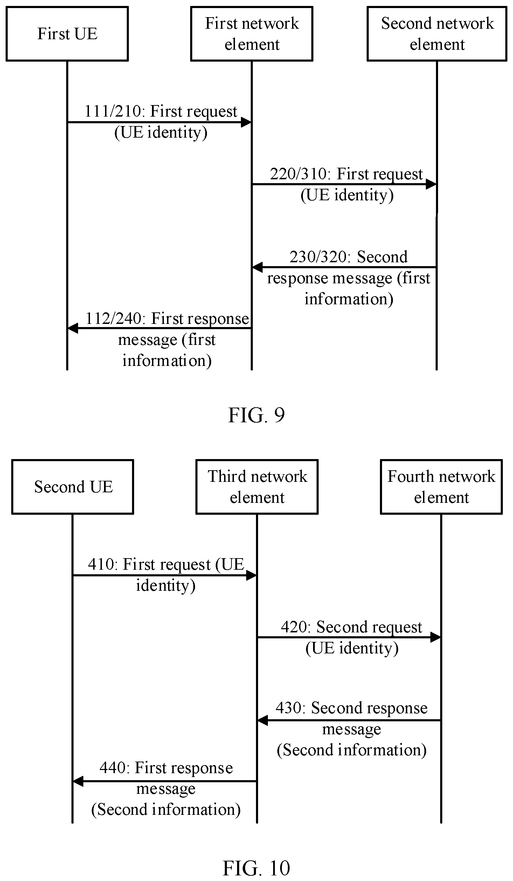

FIG. 9 is a flowchart of an authorization method in a sidelink communication service according to an example embodiment of this application. The method is performed by a first UE, and the method includes at least one of the following steps.

**Step 111:** Transmit a first request, where the first request is used to request acquisition of first information.

In some embodiments, the first request is a discovery request; or the first request is a registration request; or the first request is a UE configuration request.

For example, the first request is the discovery request, and the discovery request is a request transmitted by a UE in a discovery process. Alternatively, the first request is the registration request, and the registration request is a request in a registration process. The registration process includes at least one of initialization registration, mobile registration update, periodic registration update, or emergency registration. Alternatively, the first request is the UE configuration request, and the UE configuration request is a request for performing parameter configuration on the UE. For example, an AF provides a service parameter for the UE in a service authorization process.

In some embodiments, the first request carries a UE identity of the first UE.

**Step 112:** Receive a first response message, where the first response message carries the first information.

In some embodiments, the first information is a first token.

In some embodiments, the first information is generated by a core network element; or the first information is generated by an AF; or the first information is generated cooperatively by a core network element and an AF.

For example, the first information is generated by the core network element after check of subscription data of the first UE succeeds; or the first information is generated after the AF authorizes the first UE; or the first information is generated by the core network element after check of subscription data of the first UE succeeds and the AF authorizes the first UE.

In some embodiments, the subscription data of the first UE includes at least one of user consent and a configuration file, the user consent is a user consent associated with the first UE, and the configuration file includes at least one of a service type and a role type.

In some embodiments, the AF authorizes the first UE based on contract data of the first UE.

For example, the first information is generated by the core network element after check of subscription data of the first UE succeeds. The core network element generates the first information based on the obtained subscription data. The subscription data includes a service type supported by the first UE and a role type that the first UE may act as. The core network element generates the first information based on the subscription data. Alternatively, the first information is generated after the AF authorizes the first UE. When the AF authorizes the first UE, the AF checks contract data of the first UE, where the contract data includes a service type supported by the first UE, and the AF generates the first information based on the contract data. Alternatively, the first information is generated by the core network element after check of subscription data of the first UE succeeds and the AF authorizes the first UE. After acquiring the subscription data of the first UE, the core network element still needs to request the AF to authorize the first UE, and the first information is generated based on the contract data obtained by the AF and the subscription data obtained by the core network element.

In some embodiments, the core network element is a PCF; or the core network element is a UDM; or the core network element is a discovery security function.

In some embodiments, the first information is a first token.

In some embodiments, the first token includes at least one of content information or signature, and the content information includes at least one of policy information, service information, UE role information, or effective time.

In some embodiments, the first information is obtained by performing encryption or signature by using a private key.

In an optional embodiment, a first message of the first token is obtained by performing, by a first token generator, signature on a first hash value by using a private key. The first hash value is obtained by performing hash on content information. After acquiring the first token, the first UE may verify the first message by using a public key to obtain the first hash value. Then, a hash is performed on content information in the obtained first token to obtain a second hash value, and the first UE compares the first hash value with the second hash value. If the first hash value is consistent with the second hash value, it indicates that the first token has not been tampered with during transmission and is a correct token. If the first hash value is inconsistent with the second hash value, it indicates that information of the first token is lost or tampered with during transmission.

In another possible implementation scenario, signature of the first token is obtained after the first token generator performs signature on content information according to a signature algorithm. The signature algorithm may be a JSON Web signature algorithm, or a digital signature algorithm, or an elliptic curve digital signature algorithm, and the algorithm is carried in the first token. In addition, the first token generator signs a signature part of the first token by using the private key. After acquiring the first token, the first UE verifies the first token by using a public key to obtain first content information, and then compares the content information with content information in the first token. If the first content information is consistent with the content information in the first token, it indicates that the first token has not been tampered with during transmission and is a correct token. If the first content information is inconsistent with the content information in the first token, it indicates that information of the first token is lost or tampered with during transmission.

In another possible implementation scenario, the first token carries only content information that is encrypted by using the private key. The first token obtained by the first UE is encrypted by using the private key, and the first UE may decrypt the first token by using the public key to obtain content information.

In some embodiments, the token meets a JWT standard, including a head, payload, and signature. The header includes at least one of a token type and a used signature algorithm. The payload includes transmitted information, such as an issuer, an expiration time, an effective time, and an audience. The payload may also be referred to as a declaration, or may be referred to as valid payload. The signature is for the header and the payload, the signature part is generated by performing signature by using the private key and according to a signature algorithm carried in the header, and the signature is used to prevent data from being tampered with.

For example, after generating the header and content of the payload, the first token generator signs the header and the payload by using the private key and according to the signature algorithm of the header to obtain content of the signature part, and fills the content of the signature part into the signature to complete generation of the first token. After receiving the first token, the first UE verifies the first token by using the public key according to the signature algorithm of the header, to obtain first content information. If the first content information is consistent with the header and payload in the first token, it indicates that the first token has not been tampered with during transmission. In some embodiments, the public key corresponding to the private key is pre-configured, or the public key corresponding to the private key is carried in a first response message, or the public key corresponding to the private key is carried in the first information.

In conclusion, the method according to embodiments provides an interaction process in which the first UE requests acquisition of the first information from a network side. The acquired first information may be used for authorization between different UEs, and an effect of an inter-UE authorization mechanism in a sidelink communication service scenario may still be implemented in an absence of network coverage by using a second UE and the first information acquired in advance, thereby ensuring information security in the sidelink communication service scenario.

FIG. 9 is a flowchart of an authorization method in a sidelink communication service according to an example embodiment of this application. The method is executed by a first network element, and the method includes at least one of the following steps.

**Step 210:** A first network element receives a first request from a first UE.

In some embodiments, the first network element receives a first request from the first UE, where the first request carries a UE identity of the first UE.

In some embodiments, the first request is a discovery request; or the first request is a registration request; or the first request is a UE configuration request.

For example, the first request is the discovery request, and the discovery request is a request transmitted by the first UE to the first network element in a discovery process. Alternatively, the first request is the registration request, and the registration request is a request transmitted by the first UE to the first network element in a registration process. The registration process includes at least one of initialization registration, mobile registration update, periodic registration update, or emergency registration. Alternatively, the first request is the UE configuration request, and the UE configuration request is a request for performing parameter configuration on the UE. For example, an AF provides a service parameter for the UE in a service authorization process.

In some embodiments, the first information is a first token.

**Step 220:** The first network element transmits a second request to a second network element, where the second request is used to request authorization for the first UE.

In some embodiments, the second request is an authorization request.

**Step 230:** The first network element receives a second response message from the second network element, where the second response message carries the first information.

In some embodiments, the second response message is an authorization response message, and the authorization response message carries the first information.

In some embodiments, the first network element is a PCF, and the second network element is a UDM. The first information is generated by the UDM after check of subscription data of the first UE succeeds. Alternatively, the first network element is a PCF, and the second network element is an AF; and the first information is generated after the AF authorizes the first UE. Alternatively, the first network element is discovery security function, and the second network element is a UDM; and the first information is generated by the UDM after check of subscription data of the first UE succeeds. Alternatively, the first network element is a discovery security function, and the second network element is an AF; and the first information is generated after the AF authorizes the first UE.

**Step 240:** The first network element transmits a first response message to the first UE, where the first response message carries the first information.

In some embodiments, the first network element extracts the first information carried in the second response message, and transmits the first information to the first UE by carrying first information in the first response message.

In some embodiments, the first response message is a discovery response message; or the first response message is a registration response message; or the first response message is a UE configuration response message.

In some embodiments, the first information is obtained when the first network element performs encryption or signature by using a private key. A public key corresponding to the private key is pre-configured, or a public key corresponding to the private key is carried in the first response message, or a public key corresponding to the private key is carried in the first information.

In conclusion, the method provided in embodiments of this application provides specific working content for the first network element to authorize the UE in the sidelink communication service. Based on the first network element and the second network element, first information used for authorization between different UEs is provided for the first UE, to ensure that authorization can be performed between UEs according to the first information acquired in advance.

FIG. 9 is a flowchart of an authorization method in a sidelink communication service according to an example embodiment of this application. The method is executed by a second network element, and the method includes at least one of the following steps.

**Step 310**: The second network element receives a second request transmitted by a first network element, where the second request is used to request authorization for a first UE.

In some embodiments, the second network element receives the second request transmitted by the first network element, where the second request is used to request authorization for the first UE, and the second request carries a UE identity of the first UE.

In some embodiments, the second request is an authorization request.

In some embodiments, the first network element is a PCF, and the second network element is a UDM. The first information is generated by the UDM after check of subscription data of the first UE succeeds. Alternatively, the first network element is a PCF, and the second network element is an AF; and the first information is generated after the AF authorizes the first UE. Alternatively, the first network element is discovery security function, and the second network element is a UDM; and the first information is generated by the UDM after check of subscription data of the first UE succeeds. Alternatively, the first network element is a discovery security function, and the second network element is an AF; and the first information is generated after the AF authorizes the first UE.

In some embodiments, the second network element checks subscription data of the first UE based on the UE identity of the first UE, and authorizes the first UE when the subscription data of the first UE meets an authorization condition. Alternatively, the second network element checks contract data of the first UE based on the UE identity of the first UE, and authorizes the first UE when the contract data of the first UE meets an authorization condition. The subscription data includes at least one of user consent and a configuration file, the user consent is a user consent associated with the first UE, and the configuration file includes at least one of a service type and a role type. The contract data is contract data between the first UE and the AF, for example, the first UE signs a contract with the AF and agrees to be located, or the first UE signs a contract with the AF and agrees to be sensed, or the like.

**Step 320:** The second network element transmits a second response message to the first network element, where the second response message carries the first information.

In some embodiments, the second response message is an authorization response message. After authorizing the first UE, the second network element generates the first information, and transmits, to the first network element, the second response message in which the first information is carried.

In some embodiments, the first information is obtained when the second network element performs encryption or signature by using a private key. A public key corresponding to the private key is pre-configured, or a public key corresponding to the private key is carried in the second response message, or a public key corresponding to the private key is carried in the first information.

In some embodiments, the first information is a first token.

In conclusion, according to the method provided in embodiments of this application, the first information is generated after the second network element authorizes the first UE, and the first information is generated based on information obtained when the second network element authorizes the first UE. In this way, the generated first information ensures that a data source used in authorization performed between different UEs by using the first information is provided based on a network side.

FIG. 10 is a schematic diagram of an authorization method in a sidelink communication service according to an example embodiment of this application. In the method, a method for acquiring second information by the second UE is illustrated. A specific implementation is similar to the foregoing manner in which the first UE acquires the first information. Details are not described herein again.

**Step 410:** The second UE transmits a first request to a third network element, where the first request is used to request the second information.

In some embodiments, the first request carries a UE identity of the second UE.

**Step 420:** The third network element transmits a second request to a fourth network element, where the second request is used to request authorization for the second UE.

In some embodiments, the second request carries the UE identity of the second UE.

**Step 430:** The fourth network element transmits a second response message to the third network element, where the second response message carries the second information.

**Step 440:** The third network element transmits a first response message to the second UE, where the first response message carries the second information.

It should be noted that a function of the third network element is the same as that of the first network element, and a function of the fourth network element is the same as that of the second network element. However, in different implementations, the first network element and the third network element are a same network element, and the second network element and the fourth network element are a same network element. Alternatively, the first network element and the third network element are different network elements, and the second network element and the fourth network element are a same network element. Alternatively, the first network element and the third network element are a same network element, and the second network element and the fourth network element are different network elements. Alternatively, the first network element and the third network element are different network elements, and the second network element and the fourth network element are different network elements. Selection of the first network element, the second network element, the third network element, and the third network element is not limited in embodiments of this application.

In some embodiments, the public key and the private key appear in pairs. Therefore, a same network element provides a same public key, and different network elements provide a same public key or different public keys.

### For inter-UE authorization

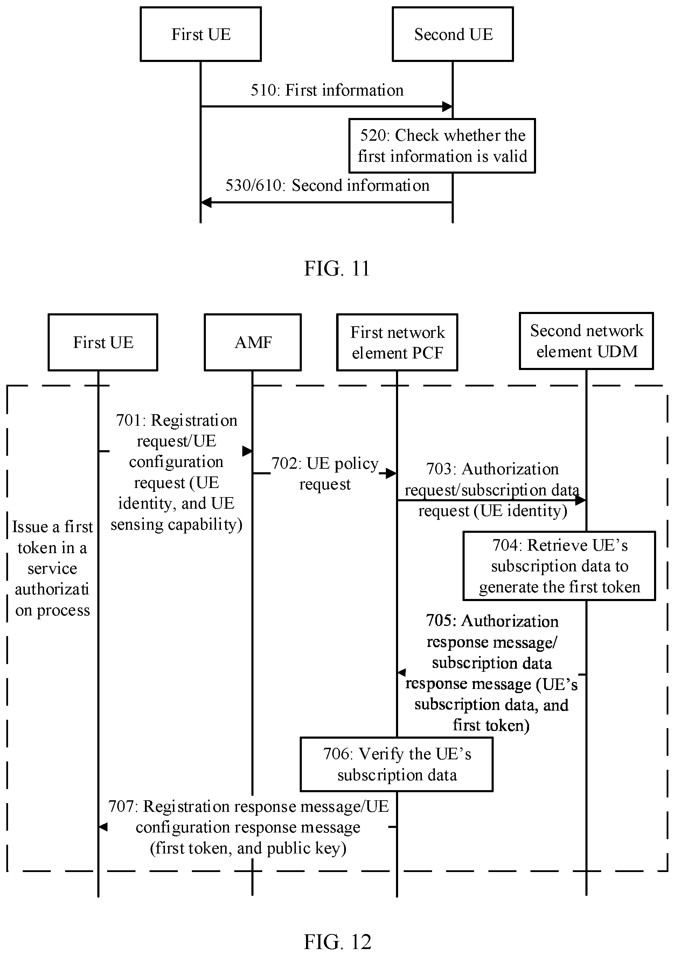

FIG. 11 is a schematic diagram of an authorization method in a sidelink communication service according to an example embodiment of this application.

In some embodiments, authorization is performed between a first UE and a second UE based on first information and second information, where the first information is information used to authorize the first UE, and the second information is information used to authorize the second UE.

In some embodiments, based on the first information and the second information, mutual authorization is performed between the first UE and the second UE, where the first information is information used to authorize the first UE, and the second information is information used to authorize the second UE.

**Step 510:** The first UE transmits the first information to the second UE.

In some embodiments, the first information is configured by a network device.

In some embodiments, the first UE acquires the first information. Specific steps of acquiring the first information are shown in embodiments illustrated in FIG. 8.

In some embodiments, the first UE transmits the first information to the second UE, where the first information is carried in a sensing discovery message. Alternatively, the first UE transmits the first information to the second UE, where the first information is carried in a direct communication request. Alternatively, the first UE transmits the first information to the second UE, where the first information is carried in a first message for initiating a direct security mode command procedure. Alternatively, the first UE transmits the first information to the second UE, where the first information is carried in a first message for initiating a direct security mode command procedure. Alternatively, the first UE transmits the first information to the second UE, where the first information is carried in a second message for initiating a direct security mode command procedure. Alternatively, the first UE transmits the first information to the second UE, where the first information is carried in a direct communication request.

In some embodiments, when transmitting the first information to the second UE, the first UE simultaneously transmits a public key of a first token generator.

In some embodiments, the first information is generated by a core network element; or the first information is generated by an AF; or the first information is generated cooperatively by a core network element and an AF.

For example, the first information is generated by the core network element after check of subscription data of the first UE succeeds; or the first information is generated after the AF authorizes the first UE; or the first information is generated by the core network element after check of subscription data of the first UE succeeds and the AF authorizes the first UE.

In some embodiments, the subscription data of the first UE includes at least one of user consent and a configuration file, the user consent is a user consent associated with the first UE, and the configuration file includes at least one of a service type and a role type.

In some embodiments, the AF authorizes the first UE based on contract data of the first UE.

In some embodiments, the core network element is a PCF; or the core network element is a UDM; or the core network element is a discovery security function.

**Step 520:** The second UE checks whether the received first information is valid.

In some embodiments, the second UE checks whether the received first information is valid based on a public key. Optionally, the first information is obtained by performing encryption or signature by using a private key.

In some embodiments, the second UE checks whether the received first information is valid based on the received public key of the first token generator.

In some embodiments, the first information is a first token.

The first token includes at least one of content information or signature, and the content information includes at least one of policy information, service information, UE role information, or effective time.

In an optional embodiment, a first message of the first token is obtained by performing, by a first token generator, signature on a first hash value by using a private key. The first hash value is obtained by performing hash on content information. After acquiring the first token, the first UE may verify the first message by using a public key to obtain the first hash value. Then, a hash is performed on content information in the obtained first token to obtain a second hash value, and the first UE compares the first hash value with the second hash value. If the first hash value is consistent with the second hash value, it indicates that the first token has not been tampered with during transmission and is a correct token. If the first hash value is inconsistent with the second hash value, it indicates that information of the first token is lost or tampered with during transmission.

In another possible implementation scenario, signature of the first token is obtained after the first token generator performs signature on content information according to a signature algorithm. The signature algorithm may be a JSON Web signature algorithm, or a digital signature algorithm, or an elliptic curve digital signature algorithm, and the algorithm is carried in the first token. The first token generator signs the first token by using the private key. After acquiring the first token, the first UE verifies the first token by using a public key to obtain first content information, and then compares the content information with content information in the first token. If the first content information is consistent with the content information in the first token, it indicates that the first token has not been tampered with during transmission and is a correct token. If the first content information is inconsistent with the content information in the first token, it indicates that information of the first token is lost or tampered with during transmission. In another possible implementation scenario, the first token carries only content information that is encrypted by using the private key. The first token obtained by the first UE is encrypted by using the private key, and the first UE may decrypt the first token by using the public key to obtain content information. If decryption is successful, it indicates that the first token is a correct token; if decryption fails or decrypted information is garbled, it indicates that the public key is incorrect and the token is invalid.

In some embodiments, the token meets a JWT standard, including a head, payload, and signature. The header includes at least one of a token type and a used signature algorithm. The payload includes transmitted information, such as an issuer, an expiration time, an effective time, and an audience. The payload may also be referred to as a declaration, or may be referred to as valid payload. The signature is for the header and the payload, the signature part is generated by performing signature by using the private key and according to a signature algorithm carried in the header, and the signature is used to prevent data from being tampered with.

For example, after generating the header and content of the payload, the first token generator signs the header and the payload by using the private key and according to the signature algorithm of the header to obtain content of the signature part, and fills the content of the signature part into the signature to complete generation of the first token. After receiving the first token, the first UE verifies the first token by using the public key according to the signature algorithm of the header, to obtain first content information. If the first content information is consistent with the header and payload in the first token, it indicates that the first token has not been tampered with during transmission.

In some embodiments, the public key corresponding to the private key is pre-configured, or the public key corresponding to the private key is carried in a first response message, or the public key corresponding to the private key is carried in the first information.

In some embodiments, the first information being valid means that the first information is transmitted without information loss and/or information modification. Alternatively, the first information can be decrypted by using the public key.

**Step 530:** The first UE receives the second information of the second UE, where the second information is transmitted by the second UE in a case that the first information is verified as valid.

In some embodiments, the second UE selects, based on a status of the second UE and the first information, whether to transmit the second information to the first UE. For example, the first information carries that a role of the first UE is an announcing UE, and a service type is sidelink positioning. In a case that the second UE does not support participating in sidelink positioning, the second UE will not transmit the second information to the first UE. In a case that the second UE supports authorization for the announcing UE, the second UE transmits the second information to the first UE.

In some embodiments, when transmitting the second information to the first UE, the second UE simultaneously transmits a public key of a second token generator.

In some embodiments, the first UE checks whether the second information is valid, and a check method is the same as that in step 620. Details are not described again.

In some embodiments, when the first UE verifies that the second information is valid, the first UE authorizes the second UE, and performs authorization between the first UE and the second UE. Alternatively, the first UE performs authorization between the first UE and the second UE based on the second information.

In some embodiments, the first UE is a discovery UE, and the second UE is a discovered UE. Alternatively, the first UE is an announcing UE, and the second UE is a monitoring UE.

In some embodiments, the first information is carried in a sensing discovery message, and the second information is carried in a sensing discovery response message. Alternatively, the first information is carried in a direct communication request, and the second information is carried in a direct communication accept message. Alternatively, the first information is carried in a first message for initiating a direct security mode command procedure, and the second information is carried in a second message for initiating the direct security mode command procedure. Alternatively, the first information is carried in a first message for initiating a direct security mode command procedure, and the second information is carried in a direct communication accept message. Alternatively, the first information is carried in a second message for initiating a direct security mode command procedure, and the second information is carried in a direct communication accept message. Alternatively, the first information is carried in a direct communication request, and the second information is carried in a first message for initiating a direct security mode command procedure. Alternatively, the first information is carried in a direct communication request, and the second information is carried in a second message for initiating a direct security mode command procedure.

In some embodiments, the first UE is a client UE, and the second UE is a target UE or a reference UE.

In some embodiments, the first information is carried in a service request, and the second information is carried in a service response message.

In conclusion, according to the method provided in embodiments of this application, the first UE and the second UE are mutually authorized by using the first information and the second information that are acquired in advance from a network side. Therefore, the first information and the second information used for authorization are acquired in advance in a case that there is network coverage, and an effect of an inter-UE authorization mechanism in a sidelink communication service scenario may still be implemented in an absence of network coverage by using the second information and the first information that are acquired in advance, thereby ensuring information security in the sidelink communication service scenario.

FIG. 11 is a schematic diagram of an authorization method in a sidelink communication service according to an example embodiment of this application.

**Step 610:** A first UE authorizes a second UE based on second information, where the second information is information used to authorize the second UE.

In some embodiments, the first UE authorizes the second UE based on the received second information.

In some embodiments, the second information is transmitted by the second UE to the first UE.

For example, the second information includes that the second UE supports participation in a sensing service and a positioning service, and the second UE supports serving as a sensing UE, a target UE, a transmitter UE of a sensing signal, or a receiver UE of a sensing signal. The first UE determines, based on content included in the second information, whether to authorize the second UE.

In some embodiments, the first UE transmits first information to the second UE, where the first information is information used to authorize the first UE. The first UE receives the second information of the second UE, where the second information is transmitted by the second UE in a case that the first information is verified as valid. Steps in which the first UE interacts with the second UE to transmit the first information and the second information are shown in step 510 to step 530 illustrated in FIG. 11. Details are not described herein again.

In some embodiments, the first UE is a discovery UE, and the second UE is a discovered UE. Alternatively, the first UE is an announcing UE, and the second UE is a monitoring UE.

In some embodiments, the first information is carried in a sensing discovery message, and the second information is carried in a sensing discovery response message. Alternatively, the first information is carried in a direct communication request, and the second information is carried in a direct communication accept message. Alternatively, the first information is carried in a first message for initiating a direct security mode command procedure, and the second information is carried in a second message for initiating the direct security mode command procedure. Alternatively, the first information is carried in a first message for initiating a direct security mode command procedure, and the second information is carried in a direct communication accept message. Alternatively, the first information is carried in a second message for initiating a direct security mode command procedure, and the second information is carried in a direct communication accept message. Alternatively, the first information is carried in a direct communication request, and the second information is carried in a first message for initiating a direct security mode command procedure. Alternatively, the first information is carried in a direct communication request, and the second information is carried in a second message for initiating a direct security mode command procedure.

In some embodiments, the first UE is a client UE, and the second UE is a target UE or a reference UE.

In some embodiments, the first information is carried in a service request, and the second information is carried in a service response message.

In some embodiments, the first UE requests acquisition of the first information. A step in which the first UE requests acquisition of the first information is shown in embodiments illustrated in FIG. 8. Details are not described herein again.

In some embodiments, a public key corresponding to a private key is pre-configured, or a public key corresponding to a private key is carried in a first response message, or a public key corresponding to a private key is carried in the first information.

In some embodiments, the first information is a first token, and the second information is a second token.

In some embodiments, the first UE may be a second UE, that is, step 610 may be further described as follows: the second UE authorizes the first UE based on first information, where the first information is information used to authorize the first UE. It should be noted that, the terms "first" and the "second" in this application are merely used to distinguish between two different UEs, and there is no limitation on whether a UE is the "first UE" or the "second UE". The same applies to description of the information.

In conclusion, the method provided in embodiments of this application supports that the first UE authorizes the second UE based on the second information, that is, completes authorization of the first UE for the second UE. The method can be applicable to some scenarios in which mutual authorization is not required between the two UEs. This can implement that the second information used for authorization is acquired in advance in a case that there is network coverage, and an effect of authorization of the first UE for the second UE in a sidelink communication service scenario may still be implemented in an absence of network coverage by using the second information acquired in advance, thereby ensuring information security in the sidelink communication service scenario.

The first information may be generated by a core network element, or may be generated by an AF, or may be generated by a core network element and an AF. The core network element may be at least one of a PCF, a UDM, or a discovery security function. Therefore, the following describes different generation methods of the first information.

### 1. The first network element is a PCF, the second network element is a UDM, and the UDM generates a token.

FIG. 12 is a schematic diagram of an authorization method in a sidelink communication service according to an example embodiment of this application. The method includes at least one of the following steps.

**Step 701:** A registration request or a UE configuration request (Registration_Request, UE Policy/Parameter Provisioning Request).

In some embodiments, a first UE transmits the registration request to an AMF. Alternatively, a first UE transmits the UE configuration request to an AMF.

In some embodiments, the request transmitted by the first UE to the AMF is a first request.

In some embodiments, the request transmitted by the first UE carries a UE identity (UE ID).

In some embodiments, the request transmitted by the first UE carries a UE sensing capability, and the UE sensing capability is used to indicate at least one of a service type, a policy type, or a role type that may be sensed by a UE.

**Step 702:** A UE policy request (Npcf_UEPolicy_Request).

In some embodiments, the AMF transmits the UE policy request to the first network element PCF, where the policy request at least carries the UE identity.

**Step 703:** An authorization request/subscription data request (Authorization Request/Nudm_SDM_Request).

In some embodiments, the PCF transmits the authorization request to the second network element UDM. Alternatively, the PCF transmits the subscription data request to the UDM.

In some embodiments, the request transmitted by the PCF to the UDM is a second request.

In some embodiments, the request transmitted by the PCF carries the UE identity.

**Step 704:** Retrieve UE's subscription data (UE's subscription data) to generate a first token.

In some embodiments, the UDM retrieves the UE's subscription data based on the UE identity, and generates the first token after the UE's subscription data is verified. The first token carries at least one of policy information, service information, UE role information, or effective time. Optionally, when the first token is generated, the UDM encrypts or signs the first information by using a private key.

In some embodiments, information carried in the first token is generated based on the subscription data.

**Step 705:** An authorization response message/subscription data response message (Authorization Response/Nudm_SDM_Response).

In some embodiments, the UDM returns the authorization response message to the PCF to complete authorization for the first UE, where the authorization response message carries the UE's subscription data and the first token.

**Step 706:** Verify the UE's subscription data.

In some embodiments, the PCF performs encryption or signature on the received first token by using a private key.

**Step 707:** A registration response message/UE configuration response message (Registration_Response/UE Policy Provisioning Response).

In some embodiments, the PCF transmits the registration response message to the first UE by using the AMF. Alternatively, the PCF transmits the UE configuration response message to the first UE.

In some embodiments, the PCF transmits a second response message to the first UE.

In some embodiments, the response message transmitted by the PCF to the first UE carries the first token. Optionally, the response message transmitted by the PCF to the first UE further carries a public key.

In conclusion, the method provided in embodiments of this application is applicable to a service authorization scenario, a first token is generated in a service authorization process, and the first UE may implement subsequent inter-UE authorization based on the first token. In this solution, the first token is generated by the UDM after the UE's subscription data is retrieved.

### 2. The first network element is a PCF, the second network element is a UDM, and the PCF generates a token.

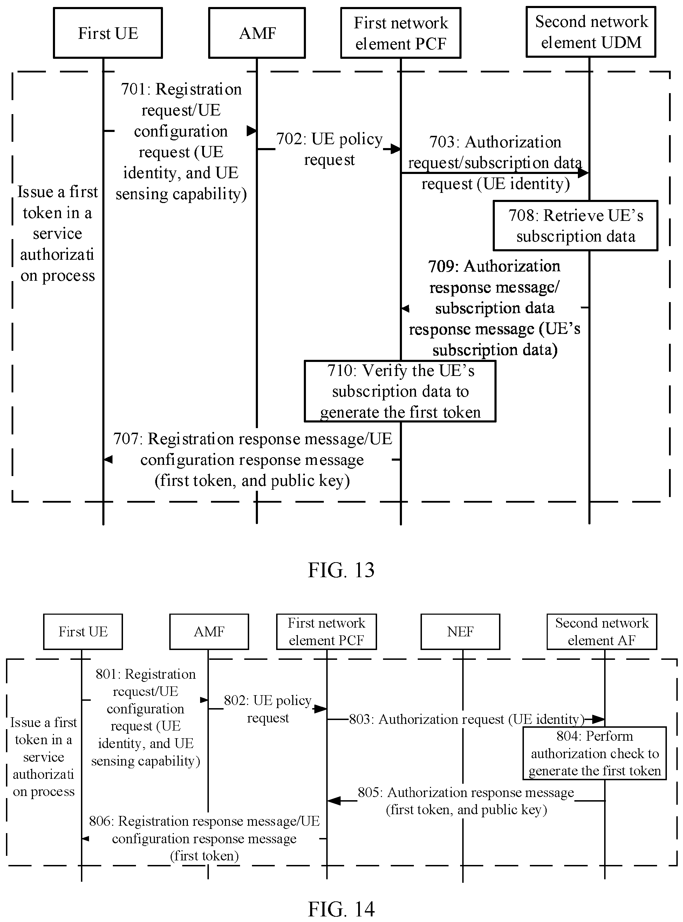

FIG. 13 is a schematic diagram of an authorization method in a sidelink communication service according to an example embodiment of this application. Different from that in FIG. 12, in this embodiment, step 704 to step 706 are replaced with step 708 to step 710, and the method includes at least one of the following steps.

**Step 708:** Retrieve UE's subscription data.

In some embodiments, the UDM retrieves the UE's subscription data based on a UE identity.

**Step 709:** An authorization response message/subscription data response message.

In some embodiments, the UDM returns the retrieved subscription data to the PCF.

**Step 710:** Verify the UE's subscription data to generate a first token.

In some embodiments, the PCF checks the subscription data acquired from the UDM to generate the first token, where the first token carries at least one of policy information, service information, UE role information, or effective time. Optionally, when the first token is generated, the PCF encrypts or signs the first information by using a private key.

In some embodiments, information carried in the first token is generated based on the subscription data.

In conclusion, the method provided in embodiments of this application is applicable to a service authorization scenario, a first token is generated in a service authorization process, and the first UE may implement subsequent inter-UE authorization based on the first token. In this solution, the first token is generated by the PCF after the UE's subscription data is verified.

### 3. The first network element is a PCF, the second network element is an AF, and the AF generates a token.

FIG. 14 is a schematic diagram of an authorization method in a sidelink communication service according to an example embodiment of this application. The method includes at least one of the following steps.

**Step 801:** A registration request/UE configuration request.

In some embodiments, a first UE transmits the registration request to an AMF. Alternatively, a first UE transmits the UE configuration request to an AMF.

In some embodiments, the request transmitted by the first UE to the AMF is a first request.

In some embodiments, the request transmitted by the first UE carries a UE identity.

In some embodiments, the request transmitted by the first UE carries a UE sensing capability, and the UE sensing capability is used to indicate at least one of a service type, a policy type, or a role type that may be sensed by a UE.

**Step 802:** A UE policy request.

In some embodiments, the AMF transmits the UE policy request to the first network element PCF, where the policy request at least carries a UE identity.

**Step 803:** An authorization request.

In some embodiments, the PCF transmits the authorization request to the second network element AF.

In some embodiments, the request transmitted by the PCF is a second request.

In some embodiments, the request transmitted by the PCF carries the UE identity.

**Step 804:** Perform authorization check to generate a token.

In some embodiments, the AF performs authorization check based on the UE identity to generate a first token, where the first token carries at least one of policy information, service information, UE role information, or effective time. Optionally, when the first token is generated, the AF encrypts or signs the first token by using a private key.

**Step 805:** An authorization response message.

In some embodiments, the AF transmits the authorization response message to the PCF, where the authorization response message carries the first token. Optionally, the authorization response message further carries a public key.

**Step 806:** A registration response message/UE configuration response message.

In some embodiments, the PCF transmits the registration response message to the first UE. Alternatively, the PCF transmits the UE configuration response message to the first UE.

In some embodiments, the PCF transmits a second response message to the first UE.

In some embodiments, the response message transmitted by the PCF to the first UE carries the first token. Optionally, the response message transmitted by the PCF to the first UE further carries a public key.

In conclusion, the method provided in embodiments of this application is applicable to a service authorization scenario, the first token is generated in a service authorization process, and the first UE may implement subsequent inter-UE authorization based on the first token. In this solution, the first token is generated by the AF after the first UE is authorized.

### 4. An AF generates a token

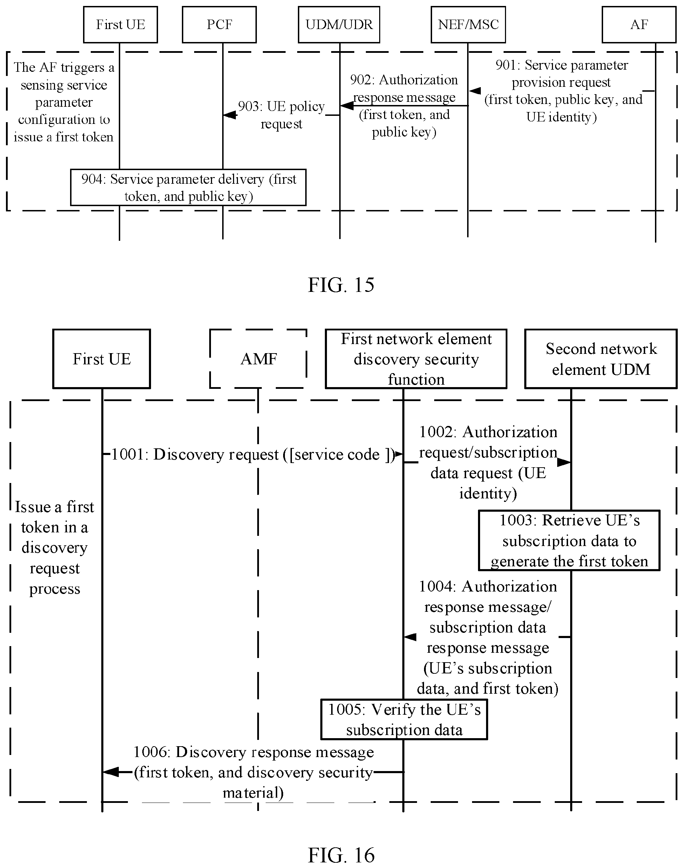

FIG. 15 is a schematic diagram of an authorization method in a sidelink communication service according to an example embodiment of this application. The method includes at least one of the following steps.

**Step 901:** A service parameter provision request (service parameter provision request).

In some embodiments, the AF actively authorizes a first UE.

In some embodiments, the AF triggers a sensing service parameter configuration to generate a first token, where the first token carries at least one of policy information, service information, UE role information, or effective time. Optionally, when the first token is generated, the AF encrypts or signs the first token by using a private key.

In some embodiments, the AF transmits the service parameter provision request to an NEF, where the service parameter provision request carries at least one of the first token or a UE identity. Alternatively, the AF transmits the service parameter provision request to a gateway mobile location center (Gateway Mobile Location Center, GMSC), where the service parameter provision request carries at least one of the first token or a UE identity. Optionally, the service parameter provision request further carries a public key.

**Step 902:** An authorization response message.

In some embodiments, the NEF transmits the authorization response message to a UDM, where the authorization response message carries at least one of the first token or the UE identity. Alternatively, a GMSC transmits the authorization response message to a UDM, where the authorization response message carries at least one of the first token or the UE identity. Optionally, the authorization response message further carries the public key.

**Step 903:** A UE policy request.

In some embodiments, the UDM transmits the UE policy request to a PCF to request configuration of UE policy information, where the UE policy request carries at least one of the first token or the UE identity. Optionally, the UE policy request further carries the public key.

**Step 904:** Service parameter delivery (service parameter delivery).

In some embodiments, the PCF completes service parameter delivery based on the received UE identity, where the service parameter carries the first token. Optionally, the service parameter further carries the public key.

In conclusion, the method provided in embodiments of this application is applicable to a scenario in which the AF actively triggers the sensing service parameter configuration. When the AF triggers the sensing service parameter configuration, the first token is generated, and the first UE may implement subsequent inter-UE authorization based on the first token.

### 5. The first network element is a discovery security function, the second network element is a UDM, and the UDM generates a token.

FIG. 16 is a schematic diagram of an authorization method in a sidelink communication service according to an example embodiment of this application. The method includes at least one of the following steps.

**Step 1001:** A discovery request.

In some embodiments, the first UE transmits a service type discovery request to a first network element discovery security function. Optionally, the service type discovery request carries service code (service code).

**Step 1002:** An authorization request/subscription data request.

In some embodiments, the discovery security function transmits a service type authorization request to a second network element UDM. Alternatively, the discovery security function transmits the subscription data request to a UDM.

In some embodiments, the request transmitted by the discovery security function to the UDM is a second request.

In some embodiments, the request transmitted by the discovery security function carries a UE identity.

**Step 1003:** Retrieve UE's subscription data.

In some embodiments, the UDM retrieves the UE's subscription data based on the UE identity, and generates a first token after the UE's subscription data is verified. The first token carries at least one of policy information, service information, UE role information, or effective time. Optionally, when the first token is generated, the UDM encrypts or signs the first information by using a private key.

In some embodiments, information carried in the first token is generated based on the subscription data.

**Step 1004:** An authorization response message/subscription data response message.

In some embodiments, the UDM returns the authorization response message to the discovery security function to complete authorization for a first UE, where the authorization response message carries the UE's subscription data and the first token.

**Step 1005:** Verify the UE's subscription data.

In some embodiments, the discovery security function performs encryption or signature on the received first token by using the private key.

**Step 1006:** Discovery response message.

In some embodiments, the discovery security function transmits a service type discovery response message to the first UE, where the service type discovery response message carries at least one of the first token or a discovery security material.

In conclusion, the method provided in embodiments of this application is applicable to a discovery security scenario, the first token is generated in a discovery security process, and the first UE may implement subsequent inter-UE authorization based on the first token. In this solution, the first token is generated by the UDM after the UE's subscription data is retrieved.

### 6. The first network element is a discovery security function, the second network element is a UDM, and the discovery security function generates a token.

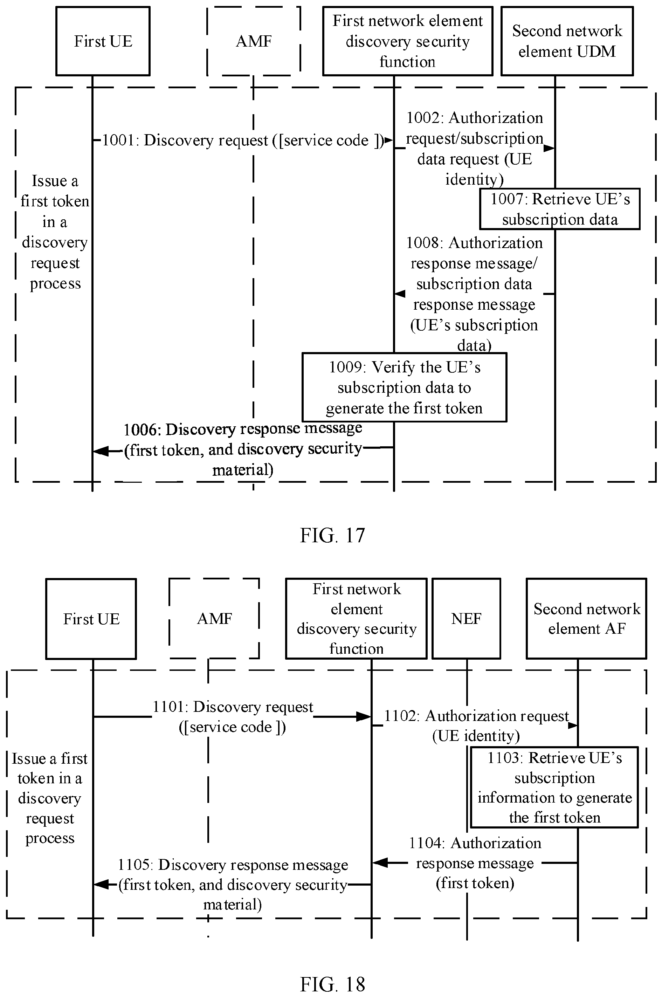

FIG. 17 is a schematic diagram of an authorization method in a sidelink communication service according to an example embodiment of this application. Different from that in FIG. 16, in this embodiment, step 1003 to step 1005 are replaced with step 1007 to step 1009.

**Step 1007:** Retrieve UE's subscription data.

In some embodiments, the UDM retrieves the UE's subscription data based on a UE identity.

**Step 1008:** An authorization response message/subscription data response message.

In some embodiments, the UDM returns the subscription data response message to the discovery security function, where the subscription data carries the UE's subscription data.

**Step 1009:** Verify the UE's subscription data to generate a first token.

In some embodiments, the discovery security function checks the subscription data acquired from the UDM to generate the first token, where the first token carries at least one of policy information, service information, UE role information, or effective time. Optionally, when the first token is generated, the discovery security function encrypts or signs the first information by using a private key.

In some embodiments, information carried in the first token is generated based on the subscription data.

In conclusion, the method provided in embodiments of this application is applicable to a discovery security scenario, the first token is generated in a discovery security process, and the first UE may implement subsequent inter-UE authorization based on the first token. In this solution, the first token is generated by the discovery security function after the UE's subscription data is verified.

### 7. The first network element is a discovery security function, the second network element is an AF, and the AF generates a token.

FIG. 18 is a schematic diagram of an authorization method in a sidelink communication service according to an example embodiment of this application. The method includes at least one of the following steps.

**Step 1101:** A discovery request.

In some embodiments, a first UE transmits a service type discovery request to a first network element discovery security function. Optionally, the service type discovery request carries service code.

**Step 1102:** An authorization request.

In some embodiments, the discovery security function transmits the authorization request to the second network element AF, where the authorization request carries a UE identity.

**Step 1103:** Retrieve UE's subscription information to generate a token.

In some embodiments, the AF performs authorization check based on the UE identity to generate a first token, where the first token carries at least one of policy information, service information, UE role information, or effective time. Optionally, when the first token is generated, the AF encrypts or signs the first token by using a private key.

**Step 1104:** An authorization response message.

In some embodiments, the AF transmits the authorization response message to the discovery security function, where the authorization response message carries the first token. Optionally, the authorization response message further carries a public key.

**Step 1105:** Discovery response.

In some embodiments, the discovery security function transmits a service type discovery response message to the first UE, where the service type discovery response message carries at least one of the first token or a discovery security material.

In conclusion, the method provided in embodiments of this application is applicable to a discovery security scenario, the first token is generated in a discovery security process, and the first UE may implement subsequent inter-UE authorization based on the first token. In this solution, the first token is generated by the AF after the first UE is authorized.

Inter-UE authorization may be implemented by using information delivered on a network side. The following further describes inter-UE authorization by using information delivered on the network side as a token.

### 1. Mutual authorization between UEs in a discovery process

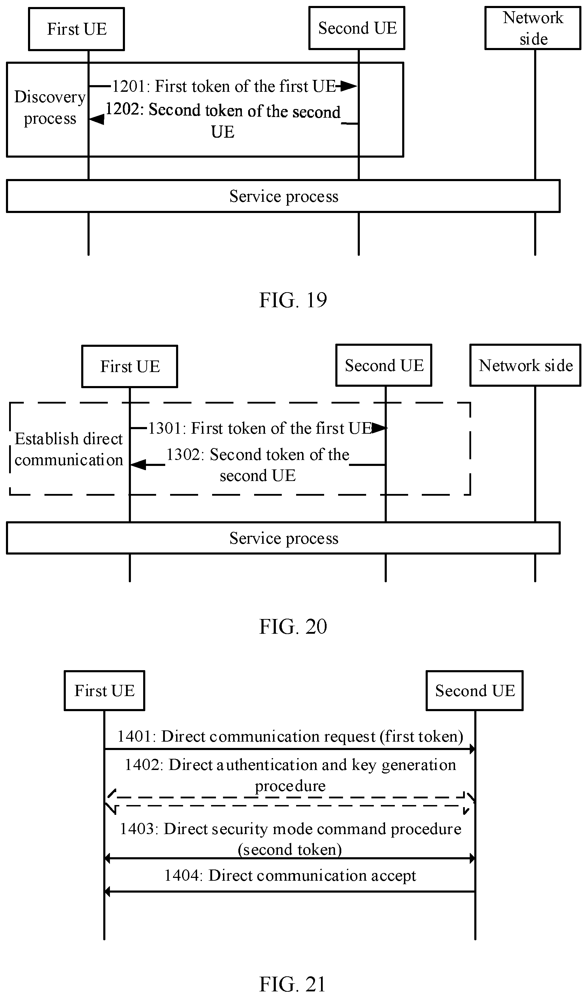

FIG. 19 is a schematic diagram of an authorization method in a sidelink communication service according to an example embodiment of this application. The method includes at least one of the following steps.

**Step 1201:** A first UE transmits a first token to a second UE.

In some embodiments, the first token is acquired by the first UE in a service process with a network side, and the first token is provided by the network side.

**Step 1202:** The second UE transmits a second token to the first UE.

The second token is transmitted by the second UE in a case that the first token is verified as valid. Optionally, the second UE checks, by using a public key, whether the first token is valid.

The first token includes at least one of content information or signature, and the content information includes at least one of policy information, service information, UE role information, or effective time.

In an optional embodiment, a first message of the first token is obtained by performing, by a first token generator, signature on a first hash value by using a private key. The first hash value is obtained by performing hash on content information. After acquiring the first token, the first UE may verify the first message by using a public key to obtain the first hash value. Then, a hash is performed on content information in the obtained first token to obtain a second hash value, and the first UE compares the first hash value with the second hash value. If the first hash value is consistent with the second hash value, it indicates that the first token has not been tampered with during transmission and is a correct token. If the first hash value is inconsistent with the second hash value, it indicates that information of the first token is lost or tampered with during transmission.

In another possible implementation scenario, signature of the first token is obtained after the first token generator performs signature on content information according to a signature algorithm. The signature algorithm may be a JSON Web signature algorithm, or a digital signature algorithm, or an elliptic curve digital signature algorithm, and the algorithm is carried in the first token. The first token generator signs the first token by using the private key. After acquiring the first token, the first UE verifies the first token by using a public key to obtain first content information, and then compares the content information with content information in the first token. If the first content information is consistent with the content information in the first token, it indicates that the first token has not been tampered with during transmission and is a correct token. If the first content information is inconsistent with the content information in the first token, it indicates that information of the first token is lost or tampered with during transmission. In another possible implementation scenario, the first token carries only content information that is encrypted by using the private key. The first token obtained by the first UE is encrypted by using the private key, and the first UE may decrypt the first token by using the public key to obtain content information. If decryption is successful, it indicates that the first token is a correct token; if decryption fails or decrypted information is garbled, it indicates that the public key is incorrect and the token is invalid.

In some embodiments, the token meets a JWT standard, including a head, payload, and signature. The header includes at least one of a token type and a used signature algorithm. The payload includes transmitted information, such as an issuer, an expiration time, an effective time, and an audience. The payload may also be referred to as a declaration, or may be referred to as valid payload. The signature is for the header and the payload, the signature part is generated by performing signature by using the private key and according to a signature algorithm carried in the header, and the signature is used to prevent data from being tampered with.

For example, after generating the header and content of the payload, the first token generator signs the header and the payload by using the private key and according to the signature algorithm of the header to obtain content of the signature part, and fills the content of the signature part into the signature to complete generation of the first token. After receiving the first token, the first UE verifies the first token by using the public key according to the signature algorithm of the header, to obtain first content information. If the first content information is consistent with the header and payload in the first token, it indicates that the first token has not been tampered with during transmission.

In some embodiments, a public key corresponding to a private key is pre-configured, or a public key corresponding to a private key is carried in a first response message, or a public key corresponding to a private key is carried in the first information.

In some embodiments, the first token being valid means that the first token is transmitted without information loss and/or information modification. Alternatively, the first token can be decrypted by using the public key.

In some embodiments, the first UE checks whether a second token is valid by using the public key.

In some embodiments, when the first UE verifies that the second token is valid, authorization is performed between the first UE and the second UE.

In conclusion, the method provided in embodiments of this application is applicable to an inter-UE discovery scenario. In the discovery scenario, authorization determining is performed between UEs based on information in a token obtained from a network side, so as to implement mutual authorization between UEs.

### 2. Mutual authorization between UEs in direct communication

FIG. 20 is a schematic diagram of an authorization method in a sidelink communication service according to an example embodiment of this application. The method includes at least one of the following steps.

**Step 1301:** A first UE transmits a first token to a second UE.

In some embodiments, the first token is acquired by the first UE in a service process with a network side, and the first token is provided by the network side.

**Step 1302:** The second UE transmits a second token to the first UE.

The second token is transmitted by the second UE in a case that the first token is verified as valid. Optionally, the second UE checks, by using a public key, whether the first token is valid.

A method for checking validity of the first token by the second UE is shown in step 1202 in FIG. 20, and details are not described herein again.

In some embodiments, the first UE checks whether a second token is valid by using the public key.

In some embodiments, when the first UE verifies that the second token is valid, authorization is performed between the first UE and the second UE.

In conclusion, the method provided in embodiments of this application is applicable to an inter-UE direct communication scenario. In the direct communication scenario, authorization determining is performed between UEs based on information in a token obtained from a network side, so as to implement mutual authorization between UEs.

In some embodiments, a method for mutual authorization between UEs in direct communication is shown in FIG. 21 to FIG. 24.

### 2.1 The first token is carried in a direct communication request, and the second token is carried in a direct security mode command procedure.

FIG. 21 is a schematic diagram of an authorization method in a sidelink communication service according to an example embodiment of this application. The method includes at least one of the following steps.

**Step 1401:** A first UE transmits a direct communication request (Direct Communication Request) to a second UE.

In some embodiments, the direct communication request transmitted by the first UE carries the first token.

**Step 1402:** A direct authentication and key generation procedure (Direct Auth and Key Establishment Procedure) between the first UE and the second UE.

In some embodiments, a direct authentication and key generation procedure is established between the first UE and the second UE.

**Step 1403:** A direct security mode command procedure (Direct Security Mode Command proecdure) between the first UE and the second UE.

In some embodiments, the direct security mode command procedure includes a direct security mode command message (Direct Security Mode Command) and a direct security mode complete message (Direct Security Mode Complet). The direct security mode command message of the direct security mode command procedure may be referred to as a first message of the direct security mode command procedure, and the direct security mode complete message of the direct security mode command procedure may be referred to as a second message of the direct security mode command procedure. If the second UE has verified that the first token is valid, the second token is carried in the first message of the direct security mode command procedure, or the second token is carried in the second message of the direct security mode command procedure.

**Step 1404:** The second UE transmits direct communication accept (Direct Communication Accept) to the first UE.

In some embodiments, the second UE transmits the direct communication accept to the first UE, and direct communication is successfully established between the first UE and the second UE.

In conclusion, the method provided in embodiments of this application provides a manner of token interaction between UEs in a direct communication scenario, which can implement inter-UE authorization while establishing a direct communication connection.

### 2.2 The first token is carried in direct communication request, and the second token is carried in a direct communication accept message.

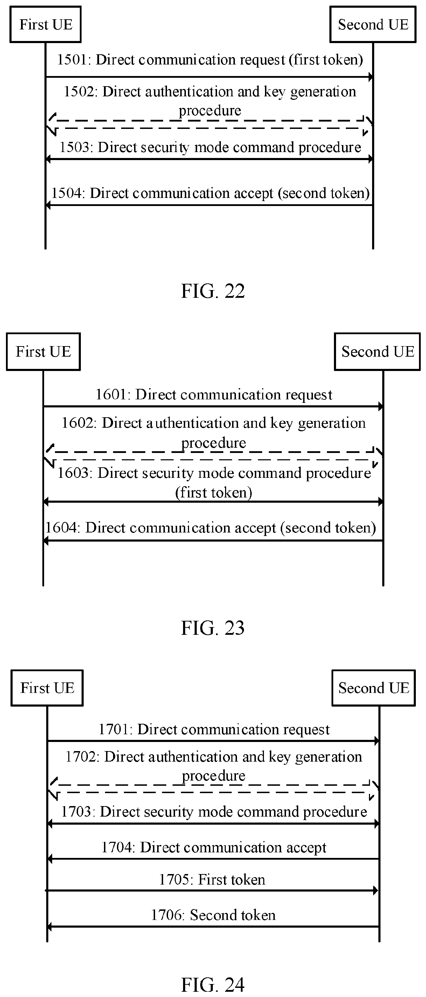

FIG. 22 is a schematic diagram of an authorization method in a sidelink communication service according to an example embodiment of this application. The method includes at least one of the following steps.

**Step 1501:** A first UE transmits a direct communication request to a second UE.

In some embodiments, the direct communication request transmitted by the first UE carries the first token.

**Step 1502:** A direct authentication and key generation procedure is established between the first UE and the second UE.

In some embodiments, the direct authentication and key generation procedure is established between the first UE and the second UE.

**Step 1503:** A direct security mode command procedure is established between the first UE and the second UE.

In some embodiments, the direct security mode command procedure is established between the first UE and the second UE. Optionally, start of the direct security mode command procedure is initiated by the first UE. Alternatively, start of the direct security mode command procedure is initiated by the second UE.

**Step 1504:** The second UE transmits the direct communication accept to the first UE.

In some embodiments, the second UE transmits the direct communication accept to the first UE, where the direct communication accept carries a second token, and direct communication is successfully established between the first UE and the second UE.

In conclusion, the method provided in embodiments of this application provides a manner of token interaction between UEs in a direct communication scenario, which can implement inter-UE authorization while establishing a direct communication connection.

### 2.3 The first token is carried in direct security mode command message, and the second token is carried in a direct communication accept message.

FIG. 23 is a schematic diagram of an authorization method in a sidelink communication service according to an example embodiment of this application. The method includes at least one of the following steps.

**Step 1601:** A first UE transmits a direct communication request to a second UE.

In some embodiments, the first UE transmits the direct communication request to the second UE to request establishment of direct communication with the second UE.

**Step 1602:** A direct authentication and key generation procedure is established between the first UE and the second UE.

In some embodiments, the direct authentication and key generation procedure is established between the first UE and the second UE.

**Step 1603:** A direct security mode command procedure is established between the first UE and the second UE.

In some embodiments, the direct security mode command procedure includes a direct security mode command message and a direct security mode complete message. The direct security mode command message of the direct security mode command procedure may be referred to as a first message of the direct security mode command procedure, and the direct security mode complete message of the direct security mode command procedure may be referred to as a second message of the direct security mode command procedure. The first UE carries the first token in the first message of the direct security mode command procedure, or the first UE carries the first token in the second message of the direct security mode command procedure.

**Step 1604:** The second UE transmits direct communication accept to the first UE.

In some embodiments, the second UE transmits the direct communication accept to the first UE, where the direct communication accept carries a second token, and direct communication is successfully established between the first UE and the second UE.

In conclusion, the method provided in embodiments of this application provides a manner of token interaction between UEs in a direct communication scenario, which can implement inter-UE authorization while establishing a direct communication connection.

### 2.4 After a security connection is established between the first UE and the second UE, the first UE transmits the first token to the second UE.

FIG. 24 is a schematic diagram of an authorization method in a sidelink communication service according to an example embodiment of this application. The method includes at least one of the following steps.

**Step 1701:** A first UE transmits a direct communication request to a second UE.

In some embodiments, the first UE transmits the direct communication request to the second UE to request establishment of direct communication with the second UE.

**Step 1702:** A direct authentication and key generation procedure is established between the first UE and the second UE.

In some embodiments, the direct authentication and key generation procedure is established between the first UE and the second UE.

**Step 1703:** A direct security mode command procedure is established between the first UE and the second UE.

In some embodiments, the direct security mode command procedure is established between the first UE and the second UE. Optionally, start of the direct security mode command procedure is initiated by the first UE. Alternatively, start of the direct security mode command procedure is initiated by the second UE.

**Step 1704:** The second UE transmits direct communication accept to the first UE.

In some embodiments, the second UE transmits the direct communication accept to the first UE, and direct communication is successfully established between the first UE and the second UE.

**Step 1705:** After direct communication is successfully established between the first UE and the second UE, the first UE transmits the first token to the second UE.

**Step 1706:** When verifying that the first token is valid, the second UE transmits a second token of the second UE.

In conclusion, the method provided in embodiments of this application provides a manner of token interaction between UEs in a direct communication scenario, so that inter-UE authorization can be implemented after a direct communication connection is established.

### 2.5 The first token is carried in a first message for initiating a direct security mode command procedure, and the second token is carried in a second message for initiating a direct security mode command procedure.

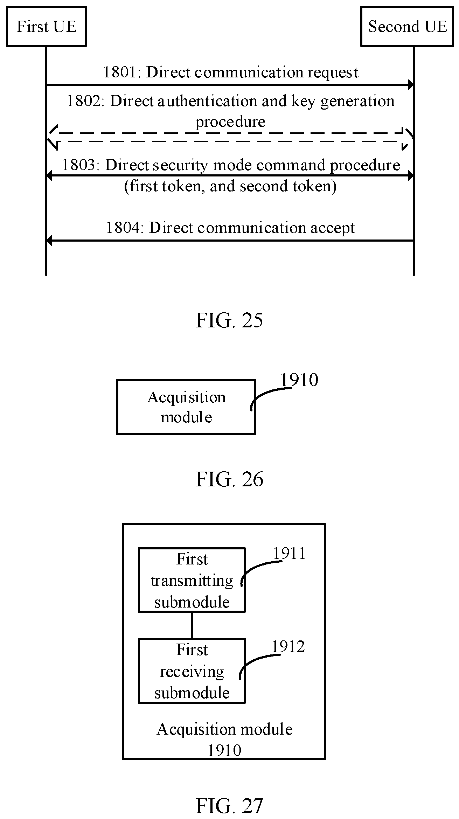

FIG. 25 is a schematic diagram of an authorization method in a sidelink communication service according to an example embodiment of this application. The method includes at least one of the following steps.

**Step 1801:** A first UE transmits a direct communication request to a second UE.

In some embodiments, the first UE transmits the direct communication request to the second UE to request establishment of direct communication with the second UE.

**Step 1802:** A direct authentication and key generation procedure is established between the first UE and the second UE.

In some embodiments, the direct authentication and key generation procedure is established between the first UE and the second UE.

**Step 1803:** A direct security mode command procedure is established between the first UE and the second UE.

In some embodiments, the direct security mode command procedure includes a direct security mode command message and a direct security mode complete message. The direct security mode command message of the direct security mode command procedure may be referred to as a first message of the direct security mode command procedure, and the direct security mode complete message of the direct security mode command procedure may be referred to as a second message of the direct security mode command procedure. The first UE carries the first token in the first message of the direct security mode command procedure or the second UE carries the second token in the second message of the direct security mode command procedure.

**Step 1804:** The second UE transmits direct communication accept to the first UE.

In some embodiments, the second UE transmits the direct communication accept to the first UE, and direct communication is successfully established between the first UE and the second UE.

In some embodiments, after direct communication is successfully established between the first UE and the second UE, the first UE transmits the first token to the second UE. When verifying that the first token is valid, the second UE transmits the second token of the second UE.

In conclusion, the method provided in embodiments of this application provides a manner of token interaction between UEs in a direct communication scenario, so that inter-UE authorization can be implemented after a direct communication connection is established.

In this application, an inter-terminal authorization in an absence of network coverage is designed, and the authorization is performed based on information provided by a network device. The following describes an apparatus for acquiring, by a terminal, information provided by a network device and performing mutual authorization between terminals based on the information.

### For authorization between a UE and a network

FIG. 26 is a structural block diagram of an authorization apparatus in a sidelink communication service according to an example embodiment of this application. The authorization apparatus may be implemented as a part of a terminal device. The apparatus includes at least a part of the following content.

**An acquisition module 1910** is configured to acquire first information, where the first information is information used for authorization between a first UE and a second UE.

In some embodiments, the first information is information used by another UE to authorize the first UE.

In some embodiments, the first information is information used to authorize the first UE when authorization is performed between different UEs.

In some embodiments, the first information is information used by another UE in the sidelink communication service to authorize the first UE.

In some embodiments, the first information is information used to authorize the first UE when authorization is performed between different UEs in the sidelink communication service.

In some embodiments, the first information is information used by another UE to authorize the first UE in an absence of network coverage.

In some embodiments, the first information is information used to authorize the first UE when authorization is performed between different UEs in an absence of network coverage.

In some embodiments, the first information is information used by another UE to authorize the first UE in a case that there is network coverage.

In some embodiments, the first information is information used to authorize the first UE when authorization is performed between different UEs in a case that there is network coverage.

The first UE requests acquisition of the first information. For example, the first information carries at least one of the following content.
(1) Policy information is used for indicating an authorization policy for the first UE.

The policy information includes at least one of: whether the UE is authorized, a range in which the UE is authorized, public land mobile networks authorized by the UE, or a granularity in which the UE is authorized. For example, a UEa has been authorized by a network, and a range of authorization is that the UE can be used for a positioning service in the region; or a UEb is not authorized by the UEa.

(2) Service information is used for indicating an authorized service type for the first UE.

In some embodiments, the service type involved in service information includes at least one of the following:
sensing service;
sidelink sensing;
positioning;
sidelink positioning;
sensing service exposure;
sidelink sensing service exposure;
positioning service exposure;
sidelink positioning service exposure;
UE-to-UE U2U relay;
UE-to-network U2N relay; or
multipath relay.

The sensing service is a service for implementing environment sensing such as target positioning, action recognition, and imaging by detecting a parameter of a physical environment by using a radio wave. In some embodiments, sensing may be referred to as sensing and communication, or may be referred to as communication integrated with sensing.

The sidelink sensing is a sensing service performed by using a sidelink.

The positioning is a service for determining a relative position or an absolute position and a speed of a target by using a radio wave.

The sidelink positioning is a positioning service performed by using a sidelink.

The sensing service exposure is a service that discloses a sensing result to a service requester or a specific target.

The sidelink sensing service includes a service that discloses a sidelink sensing result to a service requester or a specific target.

The positioning service exposure is a service that discloses a positioning result to a service requester or a specific target.

The sidelink positioning service exposure is a service that discloses a sidelink positioning result to a service requester or a specific target.

The UE-to-UE U2U relay is a communication service that allows one terminal to connect to another terminal by means of a relay.

The UE-to-network U2N relay is a communication service that allows a terminal to connect to a network by means of a relay.

The multipath relay is a service that establishes a plurality of transmission paths with a network or a terminal by means of a plurality of relays.

(3) UE role information is used for indicating a role of the first UE in the sidelink communication service.

In some embodiments, the role information of a UE includes at least one of the following:
a sensing UE;
a target UE;
an assistance UE;
a reference UE;
a transmitter UE of a sensing signal;
a receiver UE of a sensing signal;
an announcing UE;
a monitoring UE;
an anchor UE;
a server UE;
a client UE; or
a relay UE.

(4) An effective time is used for indicating an effective time of the first information and/or an authorized effective time.

In some embodiments, the effective time may be at least one of a start time, duration, or an end time.

For example, the effective time includes the start time and the end time, for example, the start time is 2023-10-11 15:00:00, and the end time is 2023-10-11 15:30:00. Alternatively, the effective time includes the start time and the duration, for example, the start time is 2023-10-11 15:00:00, and the duration is 30 minutes. Alternatively, the effective time includes the end time, for example, the end time is 2023-10-11 15:30:00. Alternatively, the effective time includes the start time, the duration, and the end time, for example, the start time is 2023-10-11 15:00:00, the duration is 30 minutes, and the end time is 2023-10-11 15:30:00. It should be noted that the effective time may be represented by using the foregoing time format, or may be represented by using another time format, such as ISO 8601, RFC 3339, or a timestamp.

In some embodiments, the first information is configured by a network device, that is, the first information is information configured by the network device for the first UE.

In some embodiments, the first information is a first token.

In some embodiments, the first token includes at least one of content information or signature, and the content information includes at least one of policy information, service information, UE role information, or effective time.

In some embodiments, the first information is obtained by performing encryption or signature by using a private key.

In an optional embodiment, a first message of the first token is obtained by performing, by a first token generator, signature on a first hash value by using a private key. The first hash value is obtained by performing hash on content information. After acquiring the first token, the first UE may verify the first message by using a public key to obtain the first hash value. Then, a hash is performed on content information in the obtained first token to obtain a second hash value, and the first UE compares the first hash value with the second hash value. If the first hash value is consistent with the second hash value, it indicates that the first token has not been tampered with during transmission and is a correct token. If the first hash value is inconsistent with the second hash value, it indicates that information of the first token is lost or tampered with during transmission.

In another possible implementation scenario, signature of the first token is obtained after the first token generator performs signature on content information according to a signature algorithm. The signature algorithm may be a JSON Web signature algorithm, or a digital signature algorithm, or an elliptic curve digital signature algorithm, and the algorithm is carried in the first token. The first token generator signs the first token by using the private key. After acquiring the first token, the first UE verifies the first token by using a public key to obtain first content information, and then compares the content information with content information in the first token. If the first content information is consistent with the content information in the first token, it indicates that the first token has not been tampered with during transmission and is a correct token. If the first content information is inconsistent with the content information in the first token, it indicates that information of the first token is lost or tampered with during transmission.

In another possible implementation scenario, the first token carries only content information that is encrypted by using the private key. The first token obtained by the first UE is encrypted by using the private key, and the first UE may decrypt the first token by using the public key to obtain content information.

In some embodiments, the token meets a JWT standard, including a head, payload, and signature. The header includes at least one of a token type and a used signature algorithm. The payload includes transmitted information, such as an issuer, an expiration time, an effective time, and an audience. The payload may also be referred to as a declaration, or may be referred to as valid payload. The signature is for the header and the payload, the signature part is generated by performing signature by using the private key and according to a signature algorithm carried in the header, and the signature is used to prevent data from being tampered with.

For example, after generating the header and content of the payload, the first token generator signs the header and the payload by using the private key and according to the signature algorithm of the header to obtain content of the signature part, and fills the content of the signature part into the signature to complete generation of the first token. After receiving the first token, the first UE verifies the first token by using the public key according to the signature algorithm of the header, to obtain first content information. If the first content information is consistent with the header and payload in the first token, it indicates that the first token has not been tampered with during transmission.

In some embodiments, a public key corresponding to a private key is pre-configured, or a public key corresponding to a private key is carried in a first response message, or a public key corresponding to a private key is carried in the first information.

In conclusion, according to the apparatus provided in embodiments of this application, the first information is acquired in advance, so that an inter-UE authorization mechanism may be implemented by using the first information and a second UE in an absence of network coverage. Therefore, the first information used for authorization is acquired in advance in a case that there is network coverage, and an effect of an inter-UE authorization mechanism in a sidelink communication service scenario may still be implemented in an absence of network coverage by using the second UE and the first information acquired in advance, thereby ensuring information security in the sidelink communication service scenario.

FIG. 27 is a structural block diagram of an authorization apparatus in a sidelink communication service according to an example embodiment of this application. The authorization apparatus may be implemented as a part of a terminal device. The apparatus includes at least a part of the following content.

**A first transmitting submodule 1911** is configured to transmit a first request, where the first request is used to request acquisition of first information.

In some embodiments, the first request is a discovery request; or the first request is a registration request; or the first request is a UE configuration request.

For example, the first request is the discovery request, and the discovery request is a request transmitted by a UE in a discovery process. Alternatively, the first request is the registration request, and the registration request is a request in a registration process. The registration process includes at least one of initialization registration, mobile registration update, periodic registration update, or emergency registration. Alternatively, the first request is the UE configuration request, and the UE configuration request is a request for performing parameter configuration on the UE. For example, an AF provides a service parameter for the UE in a service authorization process.

In some embodiments, the first request carries a UE identity of the first UE.

**A first receiving submodule 1912** is configured to receive a first response message, where the first response message carries the first information.

In some embodiments, the first information is a first token.

In some embodiments, the first information is generated by a core network element; or the first information is generated by an AF; or the first information is generated cooperatively by a core network element and an AF.

For example, the first information is generated by the core network element after check of subscription data of the first UE succeeds; or the first information is generated after the AF authorizes the first UE; or the first information is generated by the core network element after check of subscription data of the first UE succeeds and the AF authorizes the first UE.

In some embodiments, the subscription data of the first UE includes at least one of user consent and a configuration file, the user consent is a user consent associated with the first UE, and the configuration file includes at least one of a service type and a role type.

In some embodiments, the AF authorizes the first UE based on contract data of the first UE.

For example, the first information is generated by the core network element after check of subscription data of the first UE succeeds. The core network element generates the first information based on the obtained subscription data. The subscription data includes a service type supported by the first UE and a role type that the first UE may act as. The core network element generates the first information based on the subscription data. Alternatively, the first information is generated after the AF authorizes the first UE. When the AF authorizes the first UE, the AF checks contract data of the first UE, where the contract data includes a service type supported by the first UE, and the AF generates the first information based on the contract data. Alternatively, the first information is generated by the core network element after check of subscription data of the first UE succeeds and the AF authorizes the first UE. After acquiring the subscription data of the first UE, the core network element still needs to request the AF to authorize the first UE, and the first information is generated based on the contract data obtained by the AF and the subscription data obtained by the core network element.

In some embodiments, the core network element is a PCF; or the core network element is a UDM; or the core network element is a discovery security function.

In some embodiments, the first information is a first token.

In some embodiments, the first token includes at least one of content information or signature, and the content information includes at least one of policy information, service information, UE role information, or effective time.

In some embodiments, the first information is obtained by performing encryption or signature by using a private key.

In an optional embodiment, a first message of the first token is obtained by performing, by a first token generator, signature on a first hash value by using a private key. The first hash value is obtained by performing hash on content information. After acquiring the first token, the first UE may verify the first message by using a public key to obtain the first hash value. Then, a hash is performed on content information in the obtained first token to obtain a second hash value, and the first UE compares the first hash value with the second hash value. If the first hash value is consistent with the second hash value, it indicates that the first token has not been tampered with during transmission and is a correct token. If the first hash value is inconsistent with the second hash value, it indicates that information of the first token is lost or tampered with during transmission.

In another possible implementation scenario, signature of the first token is obtained after the first token generator performs signature on content information according to a signature algorithm. The signature algorithm may be a JSON Web signature algorithm, or a digital signature algorithm, or an elliptic curve digital signature algorithm, and the algorithm is carried in the first token. The first token generator signs the first token by using the private key. After acquiring the first token, the first UE verifies the first token by using a public key to obtain first content information, and then compares the content information with content information in the first token. If the first content information is consistent with the content information in the first token, it indicates that the first token has not been tampered with during transmission and is a correct token. If the first content information is inconsistent with the content information in the first token, it indicates that information of the first token is lost or tampered with during transmission.

In another possible implementation scenario, the first token carries only content information that is encrypted by using the private key. The first token obtained by the first UE is encrypted by using the private key, and the first UE may decrypt the first token by using the public key to obtain content information.

In some embodiments, the token meets a JWT standard, including a head, payload, and signature. The header includes at least one of a token type and a used signature algorithm. The payload includes transmitted information, such as an issuer, an expiration time, an effective time, and an audience. The payload may also be referred to as a declaration, or may be referred to as valid payload. The signature is for the header and the payload, the signature part is generated by performing signature by using the private key and according to a signature algorithm carried in the header, and the signature is used to prevent data from being tampered with.

For example, after generating the header and content of the payload, the first token generator signs the header and the payload by using the private key and according to the signature algorithm of the header to obtain content of the signature part, and fills the content of the signature part into the signature to complete generation of the first token. After receiving the first token, the first UE verifies the first token by using the public key according to the signature algorithm of the header, to obtain first content information. If the first content information is consistent with the header and payload in the first token, it indicates that the first token has not been tampered with during transmission. In some embodiments, a public key corresponding to a private key is pre-configured, or a public key corresponding to a private key is carried in a first response message, or a public key corresponding to a private key is carried in the first information.

In conclusion, the apparatus according to embodiments provides an interaction process in which the first UE requests acquisition of the first information from a network side. The acquired first information may be used for authorization between different UEs, and an effect of an inter-UE authorization mechanism in a sidelink communication service scenario may still be implemented in an absence of network coverage by using a second UE and the first information acquired in advance, thereby ensuring information security in the sidelink communication service scenario.

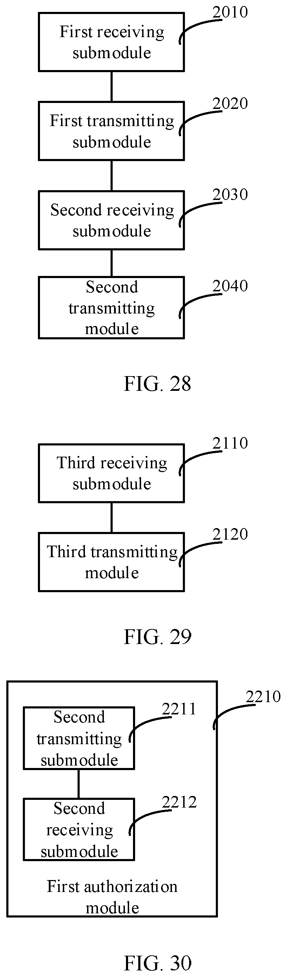

FIG. 28 is a structural block diagram of an authorization apparatus in a sidelink communication service according to an example embodiment of this application. The authorization apparatus may be implemented as a part of a terminal device. The apparatus includes at least a part of the following content.

**A first receiving module 2010** is configured to receive a first request from a first UE.

In some embodiments, the first network element receives a first request from the first UE, where the first request carries a UE identity of the first UE.

In some embodiments, the first request is a discovery request; or the first request is a registration request; or the first request is a UE configuration request.

For example, the first request is the discovery request, and the discovery request is a request transmitted by the first UE to the first network element in a discovery process. Alternatively, the first request is the registration request, and the registration request is a request transmitted by the first UE to the first network element in a registration process. The registration process includes at least one of initialization registration, mobile registration update, periodic registration update, or emergency registration. Alternatively, the first request is the UE configuration request, and the UE configuration request is a request for performing parameter configuration on the UE. For example, an AF provides a service parameter for the UE in a service authorization process.

In some embodiments, the first information is a first token.

**A first transmitting module 2020** is configured to transmit a second request to a second network element, where the second request is used to request authorization for the first UE.

In some embodiments, the second request is an authorization request.

**A second receiving module 2030** is configured to receive a second response message from the second network element, where the second response message carries the first information.

In some embodiments, the second response message is an authorization response message, and the authorization response message carries the first information.

In some embodiments, the first network element is a PCF, and the second network element is a UDM. The first information is generated by the UDM after check of subscription data of the first UE succeeds. Alternatively, the first network element is a PCF, and the second network element is an AF; and the first information is generated after the AF authorizes the first UE. Alternatively, the first network element is discovery security function, and the second network element is a UDM; and the first information is generated by the UDM after check of subscription data of the first UE succeeds. Alternatively, the first network element is a discovery security function, and the second network element is an AF; and the first information is generated after the AF authorizes the first UE.

**A second transmitting module 2040** is configured to transmit a first response message to the first UE, where the first response message carries the first information.

In some embodiments, the first network element extracts the first information carried in the second response message, and transmits the first information to the first UE by carrying first information in the first response message.

In some embodiments, the first response message is a discovery response message; or the first response message is a registration response message; or the first response message is a UE configuration response message.

In some embodiments, the first information is obtained when the first network element performs encryption or signature by using a private key. A public key corresponding to the private key is pre-configured, or a public key corresponding to the private key is carried in the first response message, or a public key corresponding to the private key is carried in the first information.

In conclusion, the apparatus provided in embodiments of this application provides specific working content for the first network element to authorize the UE in the sidelink communication service. Based on the first network element and the second network element, first information used for authorization between different UEs is provided for the first UE, to ensure that authorization can be performed between UEs according to the first information acquired in advance.

FIG. 29 is a structural block diagram of an authorization apparatus in a sidelink communication service according to an example embodiment of this application. The authorization apparatus may be implemented as a part of a terminal device. The apparatus includes at least a part of the following content.

**A third receiving module 2110** is configured to receive a second request transmitted by a first network element, where the second request is used to request authorization for a first UE.

In some embodiments, the second network element receives the second request transmitted by the first network element, where the second request is used to request authorization for the first UE, and the second request carries a UE identity of the first UE.

In some embodiments, the second request is an authorization request.

In some embodiments, the first network element is a PCF, and the second network element is a UDM. The first information is generated by the UDM after check of subscription data of the first UE succeeds. Alternatively, the first network element is a PCF, and the second network element is an AF; and the first information is generated after the AF authorizes the first UE. Alternatively, the first network element is discovery security function, and the second network element is a UDM; and the first information is generated by the UDM after check of subscription data of the first UE succeeds. Alternatively, the first network element is a discovery security function, and the second network element is an AF; and the first information is generated after the AF authorizes the first UE.

In some embodiments, the second network element checks subscription data of the first UE based on the UE identity of the first UE, and authorizes the first UE when the subscription data of the first UE meets an authorization condition. Alternatively, the second network element checks contract data of the first UE based on the UE identity of the first UE, and authorizes the first UE when the contract data of the first UE meets an authorization condition. The subscription data includes at least one of user consent and a configuration file, the user consent is a user consent associated with the first UE, and the configuration file includes at least one of a service type and a role type. The contract data is contract data between the first UE and the AF, for example, the first UE signs a contract with the AF and agrees to be located, or the first UE signs a contract with the AF and agrees to be sensed, or the like.

**A third transmitting module 2120** is configured to transmit a second response message to the first network element, where the second response message carries the first information.

In some embodiments, the second response message is an authorization response message. After authorizing the first UE, the second network element generates the first information, and transmits, to the first network element, the second response message in which the first information is carried.

In some embodiments, the first information is obtained when the second network element performs encryption or signature by using a private key. A public key corresponding to the private key is pre-configured, or a public key corresponding to the private key is carried in the second response message, or a public key corresponding to the private key is carried in the first information.

In some embodiments, the first information is a first token.

In conclusion, according to the apparatus provided in embodiments of this application, the first information is generated after the second network element authorizes the first UE, and the first information is generated based on information obtained when the second network element authorizes the first UE. In this way, the generated first information ensures that a data source used in authorization performed between different UEs by using the first information is provided based on a network side.

A structure of the apparatus for acquiring the second information by the second UE is similar to a structure of the apparatus for acquiring the first information by the first UE. Details are not described herein again.

### For inter-UE authorization

FIG. 30 is a structural block diagram of an authorization apparatus in a sidelink communication service according to an example embodiment of this application. The authorization apparatus may be implemented as a part of a terminal device. The apparatus includes at least a part of the following content.

**A first authorization module 2210** is configured to perform authorization between a first UE and a second UE based on first information and second information, where the first information is information used to authorize the first UE, and the second information is information used to authorize the second UE.

In some embodiments, the first authorization module 2210 is further configured to perform mutual authorization between the first UE and the second UE based on the first information and the second information, where the first information is information used to authorize the first UE, and the second information is information used to authorize the second UE.

**A second transmitting submodule 2211** is configured to transmit the first information to the second UE by the first UE.

In some embodiments, the first information is configured by a network device.

In some embodiments, the first UE acquires the first information. A specific apparatus for acquiring the first information is shown in the apparatus illustrated in FIG. 26.

In some embodiments, the first UE transmits the first information to the second UE, where the first information is carried in a sensing discovery message. Alternatively, the first UE transmits the first information to the second UE, where the first information is carried in a direct communication request. Alternatively, the first UE transmits the first information to the second UE, where the first information is carried in a first message for initiating a direct security mode command procedure. Alternatively, the first UE transmits the first information to the second UE, where the first information is carried in a first message for initiating a direct security mode command procedure. Alternatively, the first UE transmits the first information to the second UE, where the first information is carried in a second message for initiating a direct security mode command procedure. Alternatively, the first UE transmits the first information to the second UE, where the first information is carried in a direct communication request.

In some embodiments, when transmitting the first information to the second UE, the first UE simultaneously transmits a public key of a first token generator.

In some embodiments, the first information is generated by a core network element; or the first information is generated by an AF; or the first information is generated cooperatively by a core network element and an AF.

For example, the first information is generated by the core network element after check of subscription data of the first UE succeeds; or the first information is generated after the AF authorizes the first UE; or the first information is generated by the core network element after check of subscription data of the first UE succeeds and the AF authorizes the first UE.

In some embodiments, the subscription data of the first UE includes at least one of user consent and a configuration file, the user consent is a user consent associated with the first UE, and the configuration file includes at least one of a service type and a role type.

In some embodiments, the AF authorizes the first UE based on contract data of the first UE.

In some embodiments, the core network element is a PCF; or the core network element is a UDM; or the core network element is a discovery security function.

In some embodiments, the second UE checks whether the received first information is valid.

In some embodiments, the second UE checks whether the received first information is valid based on a public key. Optionally, the first information is obtained by performing encryption or signature by using a private key.

In some embodiments, the second UE checks whether the received first information is valid based on the received public key of the first token generator.

In some embodiments, the first information is a first token.

The first token includes at least one of content information or signature, and the content information includes at least one of policy information, service information, UE role information, or effective time.

In an optional embodiment, a first message of the first token is obtained by performing, by a first token generator, signature on a first hash value by using a private key. The first hash value is obtained by performing hash on content information. After acquiring the first token, the first UE may verify the first message by using a public key to obtain the first hash value. Then, a hash is performed on content information in the obtained first token to obtain a second hash value, and the first UE compares the first hash value with the second hash value. If the first hash value is consistent with the second hash value, it indicates that the first token has not been tampered with during transmission and is a correct token. If the first hash value is inconsistent with the second hash value, it indicates that information of the first token is lost or tampered with during transmission.

In another possible implementation scenario, signature of the first token is obtained after the first token generator performs signature on content information according to a signature algorithm. The signature algorithm may be a JSON Web signature, or a digital signature algorithm, or an elliptic curve digital signature algorithm, and the algorithm is carried in the first token. The first token generator signs the first token by using the private key. After acquiring the first token, the first UE verifies the first token by using a public key to obtain first content information, and then compares the content information with content information in the first token. If the first content information is consistent with the content information in the first token, it indicates that the first token has not been tampered with during transmission and is a correct token. If the first content information is inconsistent with the content information in the first token, it indicates that information of the first token is lost or tampered with during transmission.

In another possible implementation scenario, the first token carries only content information that is encrypted by using the private key. The first token obtained by the first UE is encrypted by using the private key, and the first UE may decrypt the first token by using the public key to obtain content information. If decryption is successful, it indicates that the first token is a correct token; if decryption fails or decrypted information is garbled, it indicates that the public key is incorrect and the token is invalid.

In some embodiments, the token meets a JWT standard, including a head, payload, and signature. The header includes at least one of a token type and a used signature algorithm. The payload includes transmitted information, such as an issuer, an expiration time, an effective time, and an audience. The payload may also be referred to as a declaration, or may be referred to as valid payload. The signature is for the header and the payload, the signature part is generated by performing signature by using the private key and according to a signature algorithm carried in the header, and the signature is used to prevent data from being tampered with.

For example, after generating the header and content of the payload, the first token generator signs the header and the payload by using the private key and according to the signature algorithm of the header to obtain content of the signature part, and fills the content of the signature part into the signature to complete generation of the first token. After receiving the first token, the first UE verifies the first token by using the public key according to the signature algorithm of the header, to obtain first content information. If the first content information is consistent with the header and payload in the first token, it indicates that the first token has not been tampered with during transmission.

In some embodiments, a public key corresponding to a private key is pre-configured, or a public key corresponding to a private key is carried in a first response message, or a public key corresponding to a private key is carried in the first information.

In some embodiments, the first information being valid means that the first information is transmitted without information loss and/or information modification. Alternatively, the first information can be decrypted by using the public key.

**A second receiving submodule 2212** is configured to receive second information of the second UE, where the second information is transmitted by the second UE in a case that the first information is verified as valid.

In some embodiments, the second UE selects, based on a status of the second UE and the first information, whether to transmit the second information to the first UE. For example, the first information carries that a role of the first UE is an announcing UE, and a service type is sidelink positioning. In a case that the second UE does not support participating in sidelink positioning, the second UE will not transmit the second information to the first UE. In a case that the second UE supports authorization for the announcing UE, the second UE transmits the second information to the first UE.

In some embodiments, when transmitting the second information to the first UE, the second UE simultaneously transmits a public key of a second token generator.

In some embodiments, the first UE checks whether the second information is valid.

In some embodiments, when the first UE verifies that the second information is valid, the first UE authorizes the second UE, and performs authorization between the first UE and the second UE. Alternatively, the first UE performs authorization between the first UE and the second UE based on the second information.

In some embodiments, the first UE is a discovery UE, and the second UE is a discovered UE. Alternatively, the first UE is an announcing UE, and the second UE is a monitoring UE.

In some embodiments, the first information is carried in a sensing discovery message, and the second information is carried in a sensing discovery response message. Alternatively, the first information is carried in a direct communication request, and the second information is carried in a direct communication accept message. Alternatively, the first information is carried in a first message for initiating a direct security mode command procedure, and the second information is carried in a second message for initiating the direct security mode command procedure. Alternatively, the first information is carried in a first message for initiating a direct security mode command procedure, and the second information is carried in a direct communication accept message. Alternatively, the first information is carried in a second message for initiating a direct security mode command procedure, and the second information is carried in a direct communication accept message. Alternatively, the first information is carried in a direct communication request, and the second information is carried in a first message for initiating a direct security mode command procedure. Alternatively, the first information is carried in a direct communication request, and the second information is carried in a second message for initiating a direct security mode command procedure.

In some embodiments, the first UE is a client UE, and the second UE is a target UE or a reference UE.

In some embodiments, the first information is carried in a service request, and the second information is carried in a service response message.

In conclusion, according to the apparatus provided in embodiments of this application, the first UE and the second UE are mutually authorized by using the first information and the second information that are acquired in advance from a network side. Therefore, the first information and the second information used for authorization are acquired in advance in a case that there is network coverage, and an effect of an inter-UE authorization mechanism in a sidelink communication service scenario may still be implemented in an absence of network coverage by using the second information and the first information that are acquired in advance, thereby ensuring information security in the sidelink communication service scenario.

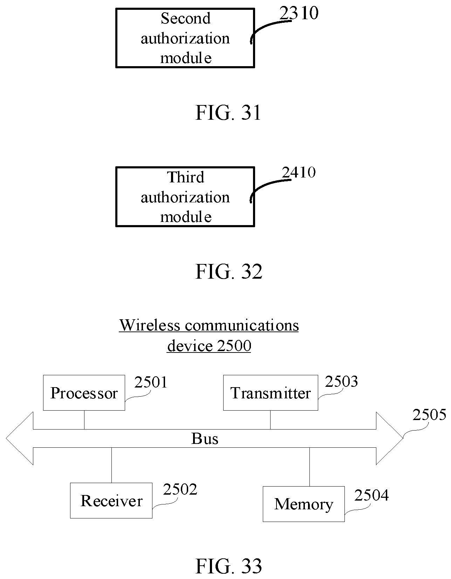

FIG. 31 is a structural block diagram of an authorization apparatus in a sidelink communication service according to an example embodiment of this application. The authorization apparatus may be implemented as a part of a terminal device. The apparatus includes at least a part of the following content.

A structure of the authorization apparatus is similar to that of the apparatus shown in FIG. 30, and details are not described herein again.

**A second authorization module 2310** is configured to perform authorization between a first UE and a second UE based on first information and second information, where the first information is information used to authorize the first UE, and the second information is information used to authorize the second UE.

In some embodiments, the second authorization module 2310 is further configured to perform mutual authorization between the first UE and the second UE based on the first information and the second information, where the first information is information used to authorize the first UE, and the second information is information used to authorize the second UE.

In conclusion, according to the apparatus provided in embodiments of this application, the first UE and the second UE are mutually authorized by using the first information and the second information that are acquired in advance from a network side. Therefore, the first information and the second information used for authorization are acquired in advance in a case that there is network coverage, and an effect of an inter-UE authorization mechanism in a sidelink communication service scenario may still be implemented in an absence of network coverage by using the second information and the first information that are acquired in advance, thereby ensuring information security in the sidelink communication service scenario.

FIG. 32 is a structural block diagram of an authorization apparatus in a sidelink communication service according to an example embodiment of this application. The authorization apparatus may be implemented as a part of a terminal device. The apparatus includes at least a part of the following content.

**A third authorization module 2410** is configured to authorize a second UE based on second information, where the second information is information used to authorize the second UE.

In some embodiments, the first UE authorizes the second UE based on the received second information.

In some embodiments, the second information is transmitted by the second UE to the first UE.

For example, the second information includes that the second UE supports participation in a sensing service and a positioning service, and the second UE supports serving as a sensing UE, a target UE, a transmitter UE of a sensing signal, or a receiver UE of a sensing signal. The first UE determines, based on content included in the second information, whether to authorize the second UE.

In some embodiments, the first UE transmits first information to the second UE, where the first information is information used to authorize the first UE. The first UE receives the second information of the second UE, where the second information is transmitted by the second UE in a case that the first information is verified as valid. An apparatus for exchanging and transmitting the first information and the second information by the first UE and the second UE is the same as the apparatus shown in FIG. 29. Details are not described herein again.

In some embodiments, the first UE is a discovery UE, and the second UE is a discovered UE. Alternatively, the first UE is an announcing UE, and the second UE is a monitoring UE.

In some embodiments, the first information is carried in a sensing discovery message, and the second information is carried in a sensing discovery response message. Alternatively, the first information is carried in a direct communication request, and the second information is carried in a direct communication accept message. Alternatively, the first information is carried in a first message for initiating a direct security mode command procedure, and the second information is carried in a second message for initiating the direct security mode command procedure. Alternatively, the first information is carried in a first message for initiating a direct security mode command procedure, and the second information is carried in a direct communication accept message. Alternatively, the first information is carried in a second message for initiating a direct security mode command procedure, and the second information is carried in a direct communication accept message. Alternatively, the first information is carried in a direct communication request, and the second information is carried in a first message for initiating a direct security mode command procedure. Alternatively, the first information is carried in a direct communication request, and the second information is carried in a second message for initiating a direct security mode command procedure.

In some embodiments, the first UE is a client UE, and the second UE is a target UE or a reference UE.

In some embodiments, the first information is carried in a service request, and the second information is carried in a service response message.

In some embodiments, the first UE requests acquisition of the first information. The apparatus for requesting acquisition of the first information by the first UE is the same as the apparatus in FIG. 26.

In some embodiments, a public key corresponding to a private key is pre-configured, or a public key corresponding to a private key is carried in a first response message, or a public key corresponding to a private key is carried in the first information.

In some embodiments, the first information is a first token, and the second information is a second token.

In some embodiments, the first UE may be a second UE, that is, the third authorization module 2410 may be further configured to authorize the first UE based on the first information, where the first information is information used to authorize the first UE. It should be noted that, the terms "first" and the "second" in this application are merely used to distinguish between two different UEs, and there is no limitation on whether a UE is the "first UE" or the "second UE". The same applies to description of the information.

In conclusion, the method provided in embodiments of this application supports that the first UE authorizes the second UE based on the second information, that is, completes authorization of the first UE for the second UE. The method can be applicable to some scenarios in which mutual authorization is not required between the two UEs. This can implement that the second information used for authorization is acquired in advance in a case that there is network coverage, and an effect of authorization of the first UE for the second UE in a sidelink communication service scenario may still be implemented in an absence of network coverage by using the second information acquired in advance, thereby ensuring information security in the sidelink communication service scenario.

It should be noted that, the apparatus provided in the foregoing embodiments is merely described by using division of the foregoing function modules as an example. In actual application, the foregoing functions may be allocated to different function modules for implementation as required, that is, an inner structure of a device is divided into different function modules to implement all or a part of the functions described above.

For the apparatus embodiments, a specific manner in which each module performs an operation is described in detail in method embodiments. Details are not described herein.

FIG. 33 shows a schematic structural diagram of a sensing device according to an embodiment of this application. The sensing device may include a processor 2501, a receiver 2502, a transmitter 2503, a memory 2504, and a bus 2505.

The processor 2501 includes one or more processing cores. The processor 2501 executes various functional applications and information processing by running a software program and a module.

The receiver 2502 and the transmitter 2503 may be implemented as a transceiver, and the transceiver may be a communications chip.

The memory 2504 is connected to the processor 2501 by using the bus 2505. In some embodiments, the processor 2501 may be implemented as a first IC chip, and the processor 2501 and the memory 2504 may be jointly implemented as a second IC chip. The first chip or the second chip may be an application specific integrated circuit (Application Specific Integrated Circuit, ASIC) chip.

The memory 2504 may be configured to store at least one computer program, and the processor 2501 is configured to execute the at least one computer program, to implement steps performed by an authorized system in the foregoing method embodiments.

In addition, the memory 2504 may be implemented by any type of volatile or non-volatile storage device or a combination thereof. The volatile or non-volatile storage device includes but is not limited to a random access memory (Random-Access Memory, RAM), a read-only memory (Read-Only Memory, ROM), an erasable programmable read-only memory (Erasable Programmable Read-Only Memory, EPROM), an electrically erasable programmable read-only memory (Electrically Erasable Programmable Read-Only Memory, EEPROM), a flash memory or another solid-state storage technology, a compact disc read-only memory (Compact Disc Read-Only Memory, CD-ROM), a digital video disc (Digital Video Disc, DVD) or another optical storage device, a magnetic cassette, a magnetic tape, a disk storage, or another magnetic storage device.

An embodiment of this application further provides a computer-readable storage medium, where the storage medium stores a computer program, and the computer program is executed by a processor of an authorized device in a sidelink communication service to implement the authorization method in the sidelink communication service described above.

Optionally, the computer-readable storage medium may include a read-only memory (Read-Only Memory, ROM), a random access memory (Random-Access Memory, RAM), a solid state drive (Solid State Drives, SSD), an optical disc, or the like. The random access memory may include a resistive random access memory (Resistance Random Access Memory, ReRAM) and a dynamic random access memory (Dynamic Random Access Memory, DRAM).

An embodiment of this application further provides a chip, where the chip includes a programmable logic circuit and/or a program instruction. When the chip runs on an authorized device in a sidelink communication service, the authorization method in the sidelink communication service described above is implemented.

An embodiment of this application further provides a computer program product or a computer program, where the computer program product or the computer program includes a computer instruction. The computer instruction is stored in a computer-readable storage medium, and a processor of an authorized device in a sidelink communication service reads the computer instruction from the computer-readable storage medium and executes the computer instruction, to implement the authorization method in the sidelink communication service described above.

It should be understood that, in embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

The term "a plurality of" mentioned in this specification means two or more; and the term "and/or" is an association relationship that, describes associated objects, and represents that there may be three relationships. For example, A and/or B, may represent three cases: only A exists, both A and B exist, and only B exists. The character "/" generally indicates "or" relationship between the associated objects.

In addition, the step numbers described in this specification only show an example of one possible execution sequence between steps. In some other embodiments, the foregoing steps may not be performed in a sequence of the numbers, for example, two different numbered steps are simultaneously performed, or two different numbered steps are performed in a sequence opposite to that shown in the figure. This is not limited in embodiments of this application.

A person skilled in the art may be aware that, in the foregoing one or more examples, functions described in embodiments of this application may be implemented by hardware, software, firmware, or any combination thereof. When implemented by using software, these functions may be stored in a computer-readable medium or transmitted as one or more instructions or code on a computer-readable medium. The computer-readable medium includes a computer storage medium and a communication medium, where the communication medium includes any medium that facilitates transfer of a computer program from one place to another. The storage medium may be any available medium accessible to a general-purpose or dedicated computer.

The foregoing descriptions are merely example embodiments of this application, but are not intended to limit this application. Any modifications, equivalent replacements, improvements and the like made without departing from the spirit and principle of this application shall fall within the protection scope of this application.

## Claims

1. An authorization method in a sidelink communication service, wherein the method is executed by a first UE, and the method comprises:
acquiring first information, wherein the first information is information used to authorize the first UE.

2. The method according to claim 1, wherein the first information is configured by a network device.

3. The method according to claim 1, wherein the acquiring the first information comprises:
transmitting a first request, wherein the first request is used to request acquisition of the first information; and
receiving a first response message, wherein the first response message carries the first information.

4. The method according to claim 1, wherein the first information carries at least one of following content:
policy information for indicating an authorization policy for the first UE;
service information for indicating an authorized service type for the first UE;
UE role information for indicating a role of the first UE in the sidelink communication service; or
an effective time for indicating an effective time of the first information and/or an authorized effective time.

5. The method according to claim 4, wherein the service type involved in the service information comprises at least one of following:
sensing service;
sidelink sensing;
positioning;
sidelink positioning;
sensing service exposure;
sidelink sensing service exposure;
positioning service exposure;
sidelink positioning service exposure;
UE-to-UE U2U relay;
UE-to-network U2N relay; or
multipath relay.

6. The method according to claim 5, wherein the UE role information comprises:
a sensing UE;
a target UE;
an assistance UE;
a reference UE;
a transmitter UE of a sensing signal;
a receiver UE of a sensing signal;
an announcing UE;
a monitoring UE;
an anchor UE;
a server UE;
a client UE; and
a relay UE.

7. The method according to any one of claims 1 to 6, wherein
the first request is a discovery request, and the first response message is a discovery response message; or
the first request is a registration request, and the first response message is a registration response message; or
the first request is a UE configuration request, and the first response message is a UE configuration response message.

8. The method according to any one of claims 1 to 7, wherein
the first information is generated by a core network element; or
the first information is generated by an application function AF; or
the first information is generated cooperatively by the core network element and the AF.

9. The method according to claim 8, wherein the first information is generated by the core network element after check of subscription data of the first UE succeeds.

10. The method according to claim 8, wherein the first information is generated after the AF authorizes the first UE.

11. The method according to claim 8, wherein the first information is generated by the core network element after check of subscription data of the first UE succeeds and the AF authorizes the first UE.

12. The method according to claim 8, wherein the core network element is a PCF or a UDM or a discovery security function.

13. The method according to any one of claims 1 to 12, wherein the first information is obtained by performing encryption or signature by using a private key; and
a public key corresponding to the private key is pre-configured, or a public key corresponding to the private key is carried in the first response message, or a public key corresponding to the private key is carried in the first information.

14. The method according to claim 1, wherein the method further comprises:
performing authorization between the first UE and a second UE based on the first information and second information, wherein the second information is information used to authorize the second UE.

15. The method according to claim 14, wherein the second information is configured by a network device.

16. The method according to claim 14, wherein the performing authorization between the first UE and the second UE based on the first information and the second information comprises:
transmitting the first information; and
receiving the second information for the second UE, wherein the second information is transmitted by the second UE in a case that the first information is verified as valid.

17. The method according to claim 14, wherein
the first UE is a discovering UE, and the second UE is a discovered UE; and/or
the first UE is an announcing UE, and the second UE is a monitoring UE.

18. The method according to claim 17, wherein
the first information is carried in a sensing discovery message, and the second information is carried in a sensing discovery response message; or
the first information is carried in a direct communication request, and the second information is carried in a direct communication accept message; or
the first information is carried in a first message for initiating a direct security mode command procedure, and the second information is carried in a second message for initiating the direct security mode command procedure; or
the first information is carried in a first message for initiating a direct security mode command procedure, and the second information is carried in a direct communication accept message; or
the first information is carried in a second message for initiating a direct security mode command procedure, and the second information is carried in a direct communication accept message; or
the first information is carried in a direct communication request, and the second information is carried in a first message for initiating a direct security mode command procedure; or
the first information is carried in a direct communication request, and the second information is carried in a second message for initiating a direct security mode command procedure.

19. The method according to claim 14, wherein
the first UE is a client UE, and the second UE is a target UE or a reference UE.

20. The method according to claim 19, wherein
the first information is carried in a service request, and the second information is carried in a service response message.

21. The method according to any one of claims 1 to 15, wherein the first information is a first token.

22. An authorization method in a sidelink communication service, wherein the method is executed by a first network element, and the method comprises:
receiving a first request from a first UE;
transmitting a second request to a second network element, wherein the second request is used to request authorization for the first UE;
receiving a second response message from the second network element, wherein the second response message carries first information, and the first information is information used to authorize the first UE; and
transmitting a first response message to the first UE, wherein the first response message carries the first information.

23. The method according to claim 22, wherein the first information carries at least one of following content:
policy information for indicating an authorization policy for the first UE;
service information for indicating an authorized service type for the first UE;
UE role information for indicating a role of the first UE in the sidelink communication service; or
an effective time for indicating an effective time of the first information and/or an authorized effective time.

24. The method according to claim 23, wherein the service type involved in the service information comprises at least one of following:
sensing service;
sidelink sensing;
positioning;
sidelink positioning;
sensing service exposure;
sidelink sensing service exposure;
positioning service exposure;
sidelink positioning service exposure;
UE-to-UE U2U relay;
UE-to-network U2N relay; or
multipath relay.

25. The method according to claim 23, wherein the UE role information comprises:
a sensing UE;
a target UE;
an assistance UE;
a reference UE;
a transmitter UE of a sensing signal;
a receiver UE of a sensing signal;
an announcing UE;
a monitoring UE;
an anchor UE;
a server UE;
a client UE; and
a relay UE.

26. The method according to any one of claims 22 to 25, wherein
the first request is a discovery request, and the first response message is a discovery response message; or
the first request is a registration request, and the first response message is a registration response message; or
the first request is a UE configuration request, and the first response message is a UE configuration response message.

27. The method according to any one of claims 22 to 26, wherein
the second request is an authorization request, and the second response message is an authorization response message.

28. The method according to any one of claims 22 to 27, wherein
the first network element is a PCF, and the second network element is a UDM; and the first information is generated by the UDM after check of subscription data of the first UE succeeds; or
the first network element is a PCF, and the second network element is an AF; and the first information is generated after the AF authorizes the first UE; or
the first network element is a discovery security function, and the second network element is a UDM; and the first information is generated by the UDM after check of subscription data of the first UE succeeds; or
the first network element is a discovery security function, and the second network element is an AF; and the first information is generated after the AF authorizes the first UE.

29. The method according to any one of claims 22 to 28, wherein the first information is obtained by performing encryption or signature by using a private key; and
a public key corresponding to the private key is pre-configured, or a public key corresponding to the private key is carried in the first response message and/or the second response message, or a public key corresponding to the private key is carried in the first information and/or second information.

30. The method according to any one of claims 25 to 28, wherein the first information is a first token.

31. An authorization method in a sidelink communication service, wherein the method is executed by a second network element, and the method comprises:
receiving a second request transmitted by a first network element, wherein the second request is used to request authorization for a first UE; and
transmitting a second response message to the first network element, wherein the second response message carries first information, and the first information is information used to authorize the first UE.

32. The method according to claim 31, wherein the first information carries at least one of following content:
policy information for indicating an authorization policy for the first UE;
service information for indicating an authorized service type for the first UE;
UE role information for indicating a role of the first UE in the sidelink communication service; or
an effective time for indicating an effective time of the first information and/or an authorized effective time.

33. The method according to claim 32, wherein the service type involved in the service information comprises at least one of following:
sensing service;
sidelink sensing;
positioning;
sidelink positioning;
sensing service exposure;
sidelink sensing service exposure;
positioning service exposure;
sidelink positioning service exposure;
UE-to-UE U2U relay;
UE-to-network U2N relay; or
multipath relay.

34. The method according to claim 32, wherein the UE role information comprises:
a sensing UE;
a target UE;
an assistance UE;
a reference UE;
a transmitter UE of a sensing signal;
a receiver UE of a sensing signal;
an announcing UE;
a monitoring UE;
an anchor UE;
a server UE;
a client UE; and
a relay UE.

35. The method according to any one of claims 31 to 34, wherein
the second request is an authorization request, and the second response message is an authorization response message.

36. The method according to any one of claims 31 to 35, wherein
the first network element is a PCF, and the second network element is a UDM; and the first information is generated by the UDM after check of subscription data of the first UE succeeds; or
the first network element is a PCF, and the second network element is an AF; and the first information is generated after the AF authorizes the first UE; or
the first network element is a discovery security function, and the second network element is a UDM; and the first information is generated by the UDM after check of subscription data of the first UE succeeds; or
the first network element is a discovery security function, and the second network element is an AF; and the first information is generated after the AF authorizes the first UE.

37. The method according to any one of claims 31 to 36, wherein the first information is obtained by performing encryption or signature by using a private key; and
a public key corresponding to the private key is pre-configured, or a public key corresponding to the private key is carried in the first response message and/or the second response message, or a public key corresponding to the private key is carried in the first information and/or second information.

38. The method according to any one of claims 31 to 36, wherein the first information is a first token.

39. An authorization method in a sidelink communication service, wherein the method is executed by a first UE, and the method comprises:
performing authorization between the first UE and a second UE based on first information and second information, wherein the first information is information used to authorize the first UE, and the second information is information used to authorize the second UE.

40. The method according to claim 39, wherein
the first information is configured by a network device; and
the second information is configured by the network device.

41. The method according to claim 39, wherein the performing authorization between the first UE and the second UE based on the first information and the second information comprises:
transmitting the first information; and
receiving the second information for the second UE, wherein the second information is transmitted by the second UE in a case that the first information is verified as valid.

42. The method according to claim 39, wherein the first information carries at least one of following information:
a service type supported by the first UE;
a role type supported by the first UE;
an effective time of the first information; or
policy information supported by the first UE.

43. The method according to claim 39, wherein the second information carries at least one of following information:
a service type supported by the second UE;
a role type supported by the second UE;
an effective time of the second information; or
policy information supported by the second UE.

44. The method according to any one of claims 39 to 43, wherein
the first UE is a discovering UE, and the second UE is a discovered UE; and/or
the first UE is an announcing UE, and the second UE is a monitoring UE.

45. The method according to claim 44, wherein
the first information is carried in a sensing discovery message, and the second information is carried in a sensing discovery response message; or
the first information is carried in a direct communication request, and the second information is carried in a direct communication accept message; or
the first information is carried in a first message for initiating a direct security mode command procedure, and the second information is carried in a second message for initiating the direct security mode command procedure; or
the first information is carried in a first message for initiating a direct security mode command procedure, and the second information is carried in a direct communication accept message; or
the first information is carried in a second message for initiating a direct security mode command procedure, and the second information is carried in a direct communication accept message; or
the first information is carried in a direct communication request, and the second information is carried in a first message for initiating a direct security mode command procedure; or
the first information is carried in a direct communication request, and the second information is carried in a second message for initiating a direct security mode command procedure.

46. The method according to any one of claims 39 to 43, wherein
the first UE is a client UE, and the second UE is a target UE or a reference UE.

47. The method according to claim 46, wherein
the first information is carried in a service request, and the second information is carried in a service response message.

48. The method according to claim 39, wherein the method further comprises:
acquiring the first information.

49. The method according to claim 48, wherein the acquiring the first information comprises:
transmitting a first request, wherein the first request is used to request acquisition of the first information; and
receiving a first response message, wherein the first response message carries the first information.

50. The method according to claim 49, wherein
the first request is a discovery request, and the first response message is a discovery response message; or
the first request is a registration request, and the first response message is a registration response message; or
the first request is a UE configuration request, and the first response message is a UE configuration response message.

51. The method according to claims 48 to 50, wherein
the first information is generated by a core network element; or
the first information is generated by an application function AF; or
the first information is generated cooperatively by a core network element and an application function.

52. The method according to claim 51, wherein the first information is generated by the core network element after check of subscription data of the first UE succeeds.

53. The method according to claim 51, wherein the first information is generated after the AF authorizes the first UE.

54. The method according to claim 51, wherein the first information is generated by the core network element after check of subscription data of the first UE succeeds and the AF authorizes the first UE.

55. The method according to claim 51, wherein the core network element is a PCF or a UDM or a discovery security function.

56. The method according to any one of claims 39 to 55, wherein the first information is obtained by performing encryption or signature by using a private key; and
a public key corresponding to the private key is pre-configured, or a public key corresponding to the private key is carried in the first response message, or a public key corresponding to the private key is carried in the first information.

57. The method according to any one of claims 39 to 55, wherein the first information is a first token, and the second information is a second token.

58. An authorization method in a sidelink communication service, wherein the method is executed by a second UE, and the method comprises:
performing authorization between the first UE and a second UE based on first information and second information, wherein the first information is information used to authorize the first UE, and the second information is information used to authorize the second UE.

59. The method according to claim 58, wherein
the first information is configured by a network device; and
the second information is configured by the network device.

60. The method according to claim 58, wherein the performing authorization between the first UE and the second UE based on the first information and the second information comprises:
receiving the first information for the first UE; and
transmitting the second information for the second UE in a case that the first information is verified as valid.

61. The method according to claim 58, wherein the first information carries at least one of following information:
a service type supported by the first UE;
a role type supported by the first UE;
an effective time of the first information; or
policy information supported by the first UE.

62. The method according to claim 58, wherein the second information carries at least one of following information:
a service type supported by the second UE;
a role type supported by the second UE;
an effective time of the second information; or
policy information supported by the second UE.

63. The method according to any one of claims 58 to 62, wherein
the first UE is a discovering UE, and the second UE is a discovered UE; and/or
the first UE is an announcing UE, and the second UE is a monitoring UE.

64. The method according to claim 63, wherein
the first information is carried in a sensing discovery message, and the second information is carried in a sensing discovery response message; or
the first information is carried in a direct communication request, and the second information is carried in a direct communication accept message; or
the first information is carried in a first message for initiating a direct security mode command procedure, and the second information is carried in a second message for initiating the direct security mode command procedure; or
the first information is carried in a first message for initiating a direct security mode command procedure, and the second information is carried in a direct communication accept message; or
the first information is carried in a second message for initiating a direct security mode command procedure, and the second information is carried in a direct communication accept message; or
the first information is carried in a direct communication request, and the second information is carried in a first message for initiating a direct security mode command procedure; or
the first information is carried in a direct communication request, and the second information is carried in a second message for initiating a direct security mode command procedure.

65. The method according to any one of claims 58 to 64, wherein
the first UE is a client UE, and the second UE is a target UE or a reference UE.

66. The method according to claim 65, wherein
the first information is carried in a service request, and the second information is carried in a service response message.

67. The method according to claim 58, wherein the method further comprises:
acquiring the second information.

68. The method according to claim 67, wherein the acquiring the second information comprises:
transmitting a first request, wherein the first request is used to request acquisition of the second information; and
receiving a first response message, wherein the first response message carries the second information.

69. The method according to claim 68, wherein
the first request is a discovery request, and the first response message is a discovery response message; or
the first request is a registration request, and the first response message is a registration response message; or
the first request is a UE configuration request, and the first response message is a UE configuration response message.

70. The method according to any one of claims 67 to 69, wherein
the second information is generated by a core network element; or
the second information is generated by an application function AF; or
the second information is generated cooperatively by a core network element and an application function.

71. The method according to claim 70, wherein the second information is generated by the core network element after check of subscription data of the second UE succeeds.

72. The method according to claim 70, wherein the second information is generated after the AF authorizes the second UE.

73. The method according to claim 70, wherein the second information is generated by the core network element after check of subscription data of the second UE succeeds and the AF authorizes the second UE.

74. The method according to claim 70, wherein the core network element is a PCF or a UDM or a discovery security function.

75. The method according to any one of claims 58 to 74, wherein the second information is obtained by performing encryption or signature by using a private key; and
a public key corresponding to the private key is pre-configured, or a public key corresponding to the private key is carried in the first response message, or a public key corresponding to the private key is carried in the second information.

76. The method according to any one of claims 58 to 74, wherein the first information is a first token, and the second information is a second token.

77. An authorization method in a sidelink communication service, wherein the method is executed by a first UE, and the method comprises:
authorizing a second UE based on second information, wherein the second information is information used to authorize the second UE.

78. The method according to claim 77, wherein
the second information is configured by a network device.

79. The method according to claim 77, wherein the method further comprises:
transmitting first information, wherein the first information is information used to authorize the first UE; and
receiving the second information for the second UE, wherein the second information is transmitted by the second UE in a case that the first information is verified as valid.

80. The method according to claim 79, wherein the first information carries at least one of following information:
a service type supported by the first UE;
a role type supported by the first UE;
an effective time of the first information; or
policy information supported by the first UE.

81. The method according to claim 77, wherein the second information carries at least one of following information:
a service type supported by the second UE;
a role type supported by the second UE;
an effective time of the second information; or
policy information supported by the second UE.

82. The method according to any one of claims 77 to 81, wherein
the first UE is a discovering UE, and the second UE is a discovered UE; and/or
the first UE is an announcing UE, and the second UE is a monitoring UE.

83. The method according to claim 82, wherein
the first information is carried in a sensing discovery message, and the second information is carried in a sensing discovery response message; or
the first information is carried in a direct communication request, and the second information is carried in a direct communication accept message; or
the first information is carried in a first message for initiating a direct security mode command procedure, and the second information is carried in a second message for initiating the direct security mode command procedure; or
the first information is carried in a first message for initiating a direct security mode command procedure, and the second information is carried in a direct communication accept message; or
the first information is carried in a second message for initiating a direct security mode command procedure, and the second information is carried in a direct communication accept message; or
the first information is carried in a direct communication request, and the second information is carried in a first message for initiating a direct security mode command procedure; or
the first information is carried in a direct communication request, and the second information is carried in a second message for initiating a direct security mode command procedure.

84. The method according to any one of claims 77 to 81, wherein
the first UE is a client UE, and the second UE is a target UE or a reference UE.

85. The method according to claim 84, wherein
the first information is carried in a service request, and the second information is carried in a service response message.

86. The method according to claim 77, wherein the method further comprises:
acquiring the first information.

87. The method according to claim 86, wherein
the first information is configured by a network device.

88. The method according to claim 86, wherein the acquiring the first information comprises:
transmitting a first request, wherein the first request is used to request acquisition of the first information; and
receiving a first response message, wherein the first response message carries the first information.

89. The method according to claim 88, wherein
the first request is a discovery request, and the first response message is a discovery response message; or
the first request is a registration request, and the first response message is a registration response message; or
the first request is a UE configuration request, and the first response message is a UE configuration response message.

90. The method according to claims 86 to 89, wherein
the first information is generated by a core network element; or
the first information is generated by an application function AF; or
the first information is generated cooperatively by a core network element and an application function.

91. The method according to claim 90, wherein the first information is generated by the core network element after check of subscription data of the first UE succeeds.

92. The method according to claim 90, wherein the first information is generated after the AF authorizes the first UE.

93. The method according to claim 90, wherein the first information is generated by the core network element after check of subscription data of the first UE succeeds and the AF authorizes the first UE.

94. The method according to claim 90, wherein the core network element is a PCF or a UDM or a discovery security function.

95. The method according to any one of claims 77 to 94, wherein the first information is obtained by performing encryption or signature by using a private key; and
a public key corresponding to the private key is pre-configured, or a public key corresponding to the private key is carried in the first response message, or a public key corresponding to the private key is carried in the first information.

96. The method according to any one of claims 77 to 95, wherein the first information is a first token, and the second information is a second token.

97. An authorization apparatus in a sidelink communication service, wherein the apparatus comprises:
an acquisition module, configured to acquire first information, wherein the first information is information used to authorize a first UE.

98. An authorization apparatus in a sidelink communication service, wherein the apparatus comprises:
a first receiving module, configured to receive a first request from a first UE;
a first transmitting module, configured to transmit a second request to a second network element, wherein the second request is used to request authorization for the first UE;
a second receiving module, configured to receive a second response message from the second network element, wherein the second response message carries first information, and the first information is information used to authorize the first UE; and
a second transmitting module, configured to transmit a first response message to the first UE, wherein the first response message carries the first information.

99. An authorization apparatus in a sidelink communication service, wherein the apparatus comprises:
a third receiving module, configured to receive a second request transmitted by a first network element, wherein the second request is used to request authorization for a first UE; and
a third transmitting module, configured to transmit a second response message to the first network element, wherein the second response message carries first information, and the first information is information used to authorize the first UE.

100. An authorization apparatus in a sidelink communication service, wherein the apparatus comprises:
a first authorization module, configured to perform authorization between a first UE and a second UE based on first information and second information, wherein the first information is information used to authorize the first UE, and the second information is information used to authorize the second UE.

101. An authorization apparatus in a sidelink communication service, wherein the apparatus comprises:
a second authorization module, configured to perform authorization between a first UE and a second UE based on first information and second information, wherein the first information is information used to authorize the first UE, and the second information is information used to authorize the second UE.

102. An authorization apparatus in a sidelink communication service, wherein the apparatus comprises:
a third authorization module, configured to authorize a second UE based on second information, wherein the second information is information used to authorize the second UE.

103. A computer-readable storage medium, wherein the computer-readable storage medium stores a computer program, and the computer program is executed by a processor to implement the authorization method in the sidelink communication service according to any one of claims 1 to 21, or the authorization method in the sidelink communication service according to any one of claims 22 to 30, or the authorization method in the sidelink communication service according to any one of claims 31 to 38, or the authorization method in the sidelink communication service according to any one of claims 39 to 57, or the authorization method in the sidelink communication service according to any one of claims 58 to 76, or the authorization method in the sidelink communication service according to any one of claims 77 to 96.

104. A chip, wherein the chip comprises a programmable logic circuit and/or a program instruction, and when the chip runs, the authorization method in the sidelink communication service according to any one of claims 1 to 21, or the authorization method in the sidelink communication service according to any one of claims 22 to 30, or the authorization method in the sidelink communication service according to any one of claims 31 to 38, or the authorization method in the sidelink communication service according to any one of claims 39 to 57, or the authorization method in the sidelink communication service according to any one of claims 58 to 76, or the authorization method in the sidelink communication service according to any one of claims 77 to 96 is implemented.

105. A computer program product or a computer program, wherein the computer program product or the computer program comprises a computer instruction, the computer instruction is stored in a computer-readable storage medium, and the processor reads the computer instruction from the computer-readable storage medium and executes the computer instruction, to implement the authorization method in the sidelink communication service according to any one of claims 1 to 21, or the authorization method in the sidelink communication service according to any one of claims 22 to 30, or the authorization method in the sidelink communication service according to any one of claims 31 to 38, or the authorization method in the sidelink communication service according to any one of claims 39 to 57, or the authorization method in the sidelink communication service according to any one of claims 58 to 76, or the authorization method in the sidelink communication service according to any one of claims 77 to 96.
